# EUROPÄISCHE PATENTSCHRIFT

(11) **EP 0 740 743 B1**
(45) Veröffentlichungstag und Bekanntmachung des Hinweises auf die Patenterteilung: **26.09.2001**
(21) Anmeldenummer: 95915788.4
(22) Anmeldetag: 13.04.1995
(51) Int. Cl.: F02M 61/18, F02M 61/16

(54) **DÜSENPLATTE, INSBESONDERE FÜR EINSPRITZVENTILE UND VERFAHREN ZUR HERSTELLUNG EINER DÜSENPLATTE**
NOZZLE PLATE, IN PARTICULAR A NOZZLE PLATE FOR INJECTION VALVES, AND METHOD OF MANUFACTURING THE NOZZLE PLATE
PLAQUE D'INJECTEUR, EN PARTICULIER POUR SOUPAPES D'INJECTION, ET SON PROCEDE DE FABRICATION

(30) Priorität: 30.09.1994 DE 4435163
(43) Veröffentlichungstag der Anmeldung: 06.11.1996
(73) Patentinhaber: ROBERT BOSCH GMBH, 70442 Stuttgart (DE)
(72) Erfinder: FLIK, Gottfried, D-71229 Leonberg (DE); DANTES, Guenter, D-71735 Eberdingen (DE); MOERSCH, Gilbert, D-70563 Stuttgart (DE); NOWAK, Detlef, D-70435 Stuttgart (DE); HEYSE, Jörg, D-71706 Markgröningen (DE)
(86) Internationale Anmeldenummer: DE9500523
(87) Internationale Veröffentlichungsnummer: WO9610694

(56) Entgegenhaltungen:
- WO-A-93/18299
- GB-A- 298 252
- PATENT ABSTRACTS OF JAPAN vol. 010 no. 286 (M-521) ,27.September 1986 & JP,A,61 104156 (NIPPON DENSO) 22.Mai 1986,
- PATENT ABSTRACTS OF JAPAN vol. 6 no. 220 (M-169) [1098] ,5.November 1982 & JP,A,57 124074 (NIHON KIKAKI) 2.August 1982,

## Beschreibung

### Stand der Technik

Die Erfindung geht aus von einer Düsenplatte, insbesondere für Einspritzventile, nach dem Oberbegriff des Anspruchs 1 bzw. von einem Verfahren zur Herstellung einer Düsenplatte nach dem Oberbegriff des Anspruchs 28.

Es ist bereits aus der DE-OS 27 23 280 bekannt, an einem Brennstoffeinspritzventil stromabwärts einer Dosieröffnung ein Brennstoffaufbrechglied in der Form einer ebenen dünnen Scheibe auszuführen, die eine Vielzahl von gebogenen schmalen Schlitzen aufweist. Die bogenförmigen Schlitze, die durch Ätzen in der Scheibe eingebracht sind, sorgen mit ihrer Geometrie, also mit ihrer radialen Breite und ihrer Bogenlänge, dafür, daß ein Brennstoffschleier gebildet wird, der in kleine Tröpfchen aufbricht. Die jeweils in Gruppen angeordneten bogenförmigen Schlitze zerreißen den Brennstoff entsprechend ihrer in der Horizontalen eingebrachten Geometrie. Die einzelnen Schlitzgruppen müssen sehr exakt zueinander eingebracht werden, um das Aufbrechen des Brennstoffs in gewünschter Weise zu erreichen. Über die gesamte axiale Erstreckung des Aufbrechgliedes weisen die bogenförmigen Schlitze jeweils eine konstante Öffnungsweite auf. Die Zerstäubung soll also nur durch die horizontale, radial ausgebildete Geometrie der Schlitze in der Ebene des Aufbrechgliedes verbessert werden. Aufgrund der in Gruppen ausgebildeten Schlitze läßt sich keine vollständig gleichmäßige Zerstäubung des Brennstoffs erzielen.

### Vorteile der Erfindung

Die erfindungsgemäße Düsenplatte mit den kennzeichnenden Merkmalen des Anspruchs 1 hat demgegenüber den Vorteil, daß eine gleichmäßige Feinstzerstäubung des Brennstoffs ohne Zusatzenergie erreicht wird, die eine deutlich verbesserte Zerstäubungsgüte gegenüber bekannten Düsenplatten aufweist. Dies wird dadurch erreicht, daß die Düsenplatte wenigstens einen ununterbrochenen Ringspalt aufweist, so daß der abzuspritzende Brennstoff unmittelbar stromabwärts des Ringspaltes eine zusammenhängende, ringförmige Strahllamelle bildet. Aufgrund der Geometrie der Düsenplatte bzw. des Ringspaltes besitzt diese Lamelle eine kegelstumpfähnliche bzw. tulpenförmige Gestalt. Durch die Oberflächenspannung wird der Brennstoffkegel in stromabwärtiger Richtung und also mit zunehmendem Durchmesser in seiner Brennstoffilmstärke immer dünner, bis er in kleinste Tröpfchen zerfällt. Diese feinen Tröpfchen weisen einen gegenüber dem Stand der Technik reduzierten sogenannten Sauter Mean Diameter (SMD) auf, also einen verringerten mittleren Tropfendurchmesser des abgespritzten Brennstoffs, wobei SMD von < 60 *µ*m erreichbar sind. Als Konsequenz können u.a. die Abgasemission einer Brennkraftmaschine weiter reduziert und ebenso eine Verringerung des Brennstoffverbrauchs erzielt werden.

Als weiterer Vorteil ergibt sich aus der erfindungsgemäßen Anordnung, daß eine gleichmäßige Verteilung des abgespritzten Brennstoffs auf einer vergleichsweise großen Abspritzfläche erzielt wird. Dadurch liegt eine geringere Tröpfchenpackungsdichte im nach der zerfallenen Lamelle gebildeten Brennstoffspray vor, und eine gute Durchmischung mit der Saugrohrluftströmung der Brennkraftmaschine wird erreicht. Außerdem besteht dann eine geringere Gefahr einer Tröpfchenkoagulation, also einer Wiedervereinigung zu größeren Tropfen.

Durch den an der erfindungsgemäßen Düsenplatte integrierten feinporigen Filter stromaufwärts des Ringspaltes ergeben sich weitere Vorteile. Der Filter hat die Funktion, im Brennstoff mitgespülte Schmutzpartikel, die gleich oder größer als die Ringspaltweite sind, vom Eintritt in die Düsenplatte fernzuhalten. Der Ringspalt kann so nicht verstopft werden. Außerdem ist der Filter ein Strömungsgleichrichter, der den ankommenden Brennstoff beruhigt und somit Turbulenzen, wie Strömungsschwankungen und Wirbel verringert. Zur Erzeugung einer stabilen, fein zerstäubenden Lamelle ist genau diese turbulenzarme Strömung in der Düsenplatte nötig.

Von Vorteil ist es zudem, daß durch Veränderung der axialen Ringspalthöhe eine Beeinflussung des Lamellenwinkels möglich ist. Eine Variation der Ringspalthöhe führt jedoch nur zu unwesentlichen Durchflußänderungen, da die Strömung im Ringspalt einseitig abgelöst ist. Somit können der Durchfluß über die Ringspaltweite und der Lamellenwinkel über die Ringspalthöhe getrennt voneinander eingestellt werden.

Durch die in den Unteransprüchen aufgeführten Maßnahmen sind vorteilhafte Weiterbildungen und Verbesserungen der im Anspruch 1 angegebenen Düsenplatte möglich.

In vorteilhafter Weise lassen sich auch mit erfindungsgemäßen Düsenplatten Lamellen erzeugen, deren Mittelachsen nicht parallel zur Ventillängsachse verlaufen, so daß von Schiefstrahlventilen gesprochen werden kann. Diese Schiefstrahlen sind erzeugbar, indem entweder ein kreisförmiger Ringspalt exzentrisch zur Ventillängsachse oder ein Ringspalt mit einer von einem Kreis abweichenden Form ausgebildet wird. Nützlich ist ein Schiefstrahlventil dann, wenn ein Einspritzventil aus konstruktiven Gründen nicht beliebig geneigt in das Saugrohr einer

Brennkraftmaschine eingebaut werden kann. Mit den neuen Düsenplatten kann so trotzdem direkt auf ein Einlaßventil gezielt werden.

Ein weiterer Vorteil ergibt sich durch die Verwendung zweier Ringspalte in einer Düsenplatte. Aus jedem Ringspalt tritt somit eine tulpenförmige Lamelle aus. Eine solche Düsenplatte ist in Verbindung mit einer Multi-Point-Einspritzung besonders dann geeignet, wenn mit einem Einspritzventil auf je zwei Einlaßventile pro Zylinder einer Brennkraftmaschine gespritzt werden soll.

Aus strömungstechnischer Sicht ist es besonders vorteilhaft, einen axialen Ringspaltversatz vorzusehen. Der Ringspaltversatz führt dazu, daß die durch die Ausbildung der Ringkammer erzeugte Radialgeschwindigkeitskomponente der Strömung weitgehend erhalten bleibt. Die Strömungslauflänge im engsten Querschnitt des Ringspaltes ist nämlich auf ein Minimum herabgesetzt. Mit dem Ringspaltversatz wird eine weitere Verbesserung der Laminarität der Strömung erreicht, so daß Turbulenzen in der Lamelle weiter verringert werden, wodurch letztlich eine verbesserte Zerstäubung des Brennstoffs eintritt. Weiterhin ergibt sich in vorteilhafter Weise eine größere Beeinflußbarkeit des Abspritzwinkels in Abhängigkeit von Art und Größe des Ringspaltversatzes.

Das erfindungsgemäße Verfahren zur Herstellung einer Düsenplatte mit den kennzeichnenden Merkmalen des Anspruchs 28 hat den Vorteil, daß an sich bekannte Verfahren mit Prozessen zur Herstellung von Mikrostrukturen kombiniert werden, wodurch in kostengünstiger Weise eine Vielzahl von Düsenplatten gleichzeitig in exakt gleicher Ausführung herstellbar ist. Auf einem sogenannten Nutzen mit vorgegebener Plattengröße können nämlich mehrere Hundert rasterförmig angeordnete erfindungsgemäße Düsenplatten gleichzeitig gefertigt werden, womit der Arbeitsaufwand pro Düsenplatte stark herabgesetzt ist.

Durch die in den Unteransprüchen aufgeführten Maßnahmen sind vorteilhafte Weiterbildungen und Verbesserungen des im Anspruch 22 angegebenen Verfahrens möglich.

Besonders vorteilhaft ist es, zur Herstellung der erfindungsgemäßen Düsenplatte Verfahren der Mikrostrukturierung, wie Diamantdrehen oder Ablatieren mittels Excimerlasers, mit den Verfahren Spritzgießen und Galvanisieren gemeinsam einzusetzen. Diese Herstellungstechnologie ist bisher noch nicht bekannt. Ein weiterer Vorteil besteht darin, daß mit einer äußerst exakt hergestellten Urform als Mikrostrukturteil ein Prägestempel durch Galvanisieren abformbar ist, der eine so große Genauigkeit besitzt, daß Düsenplatten in gleichbleibender Qualität mindestens zehntausendmal mit ihm herstellbar sind.

### Zeichnung

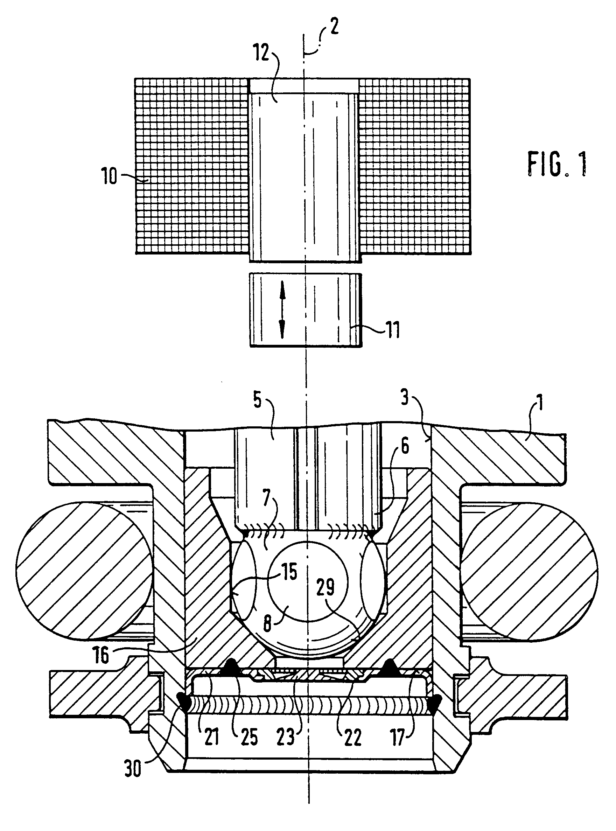

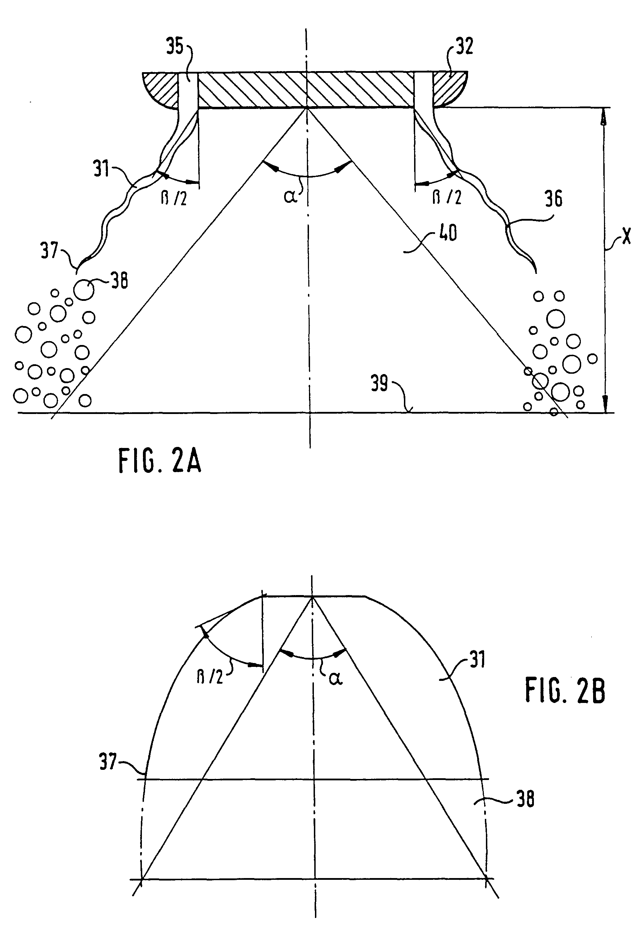

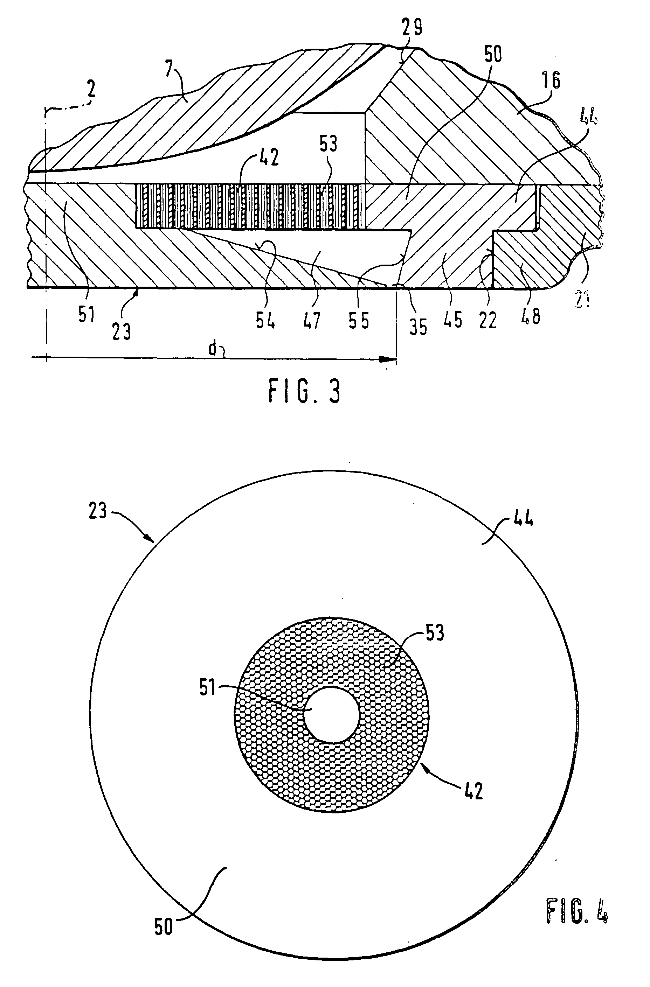

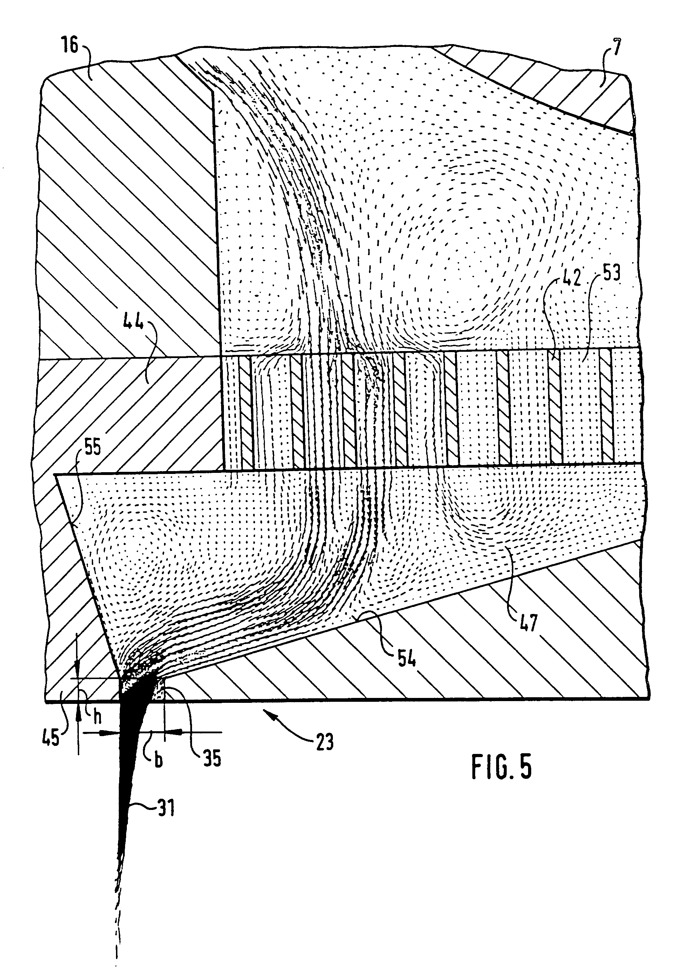

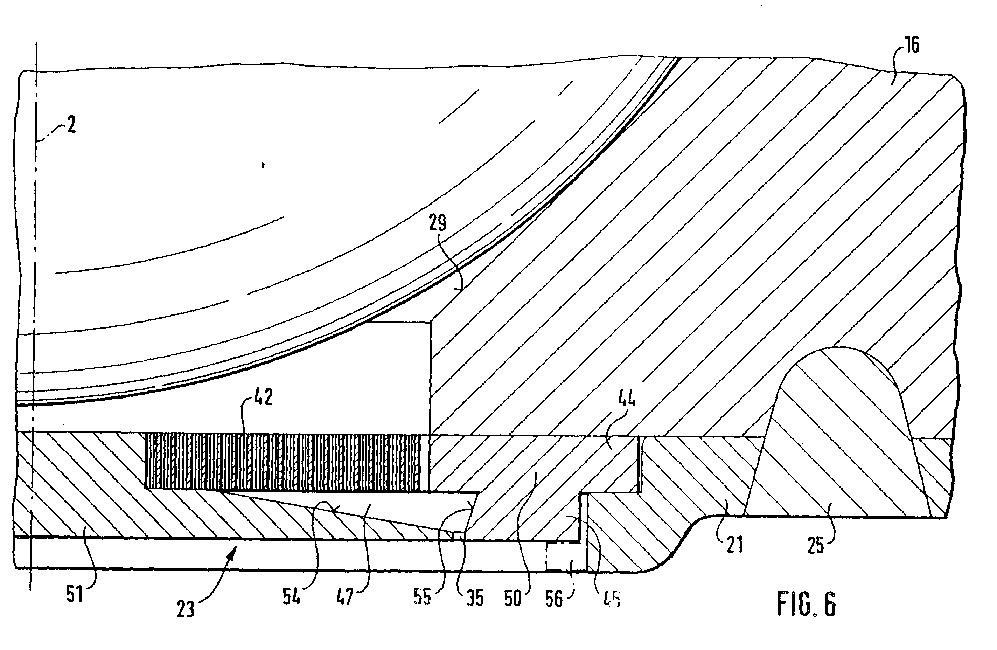

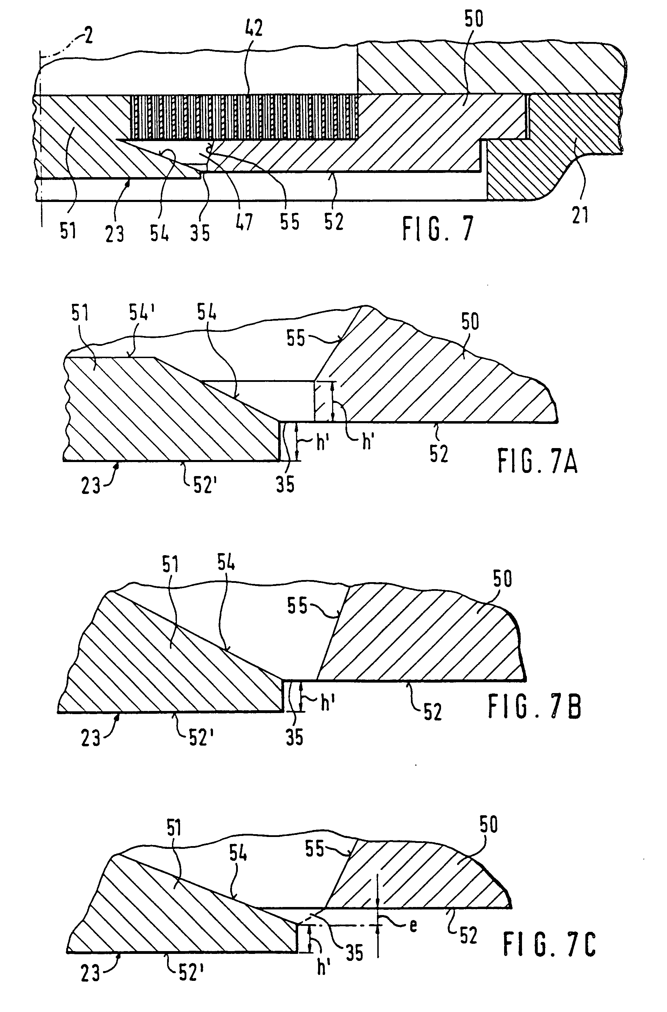

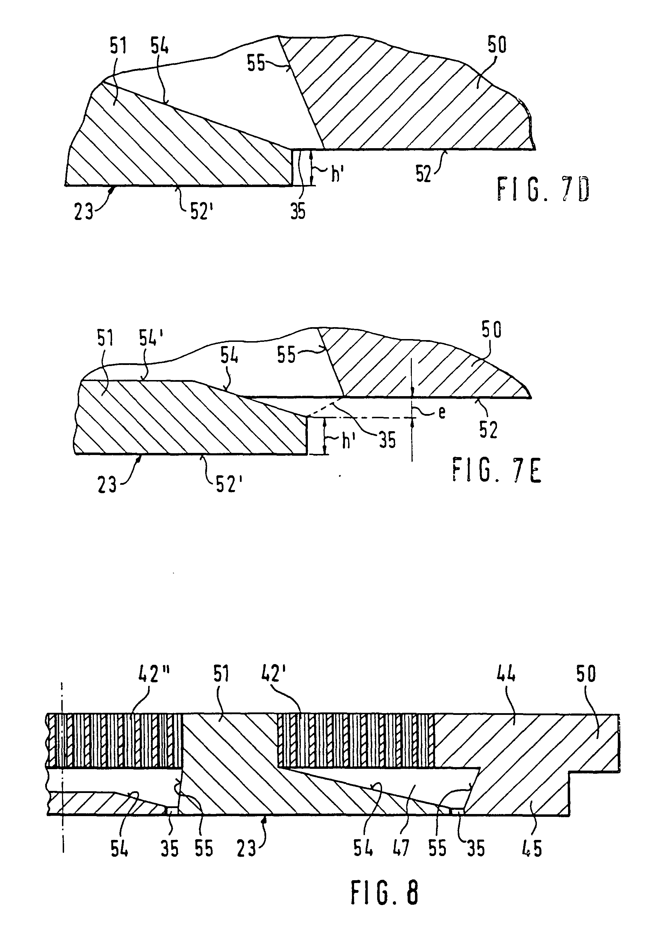

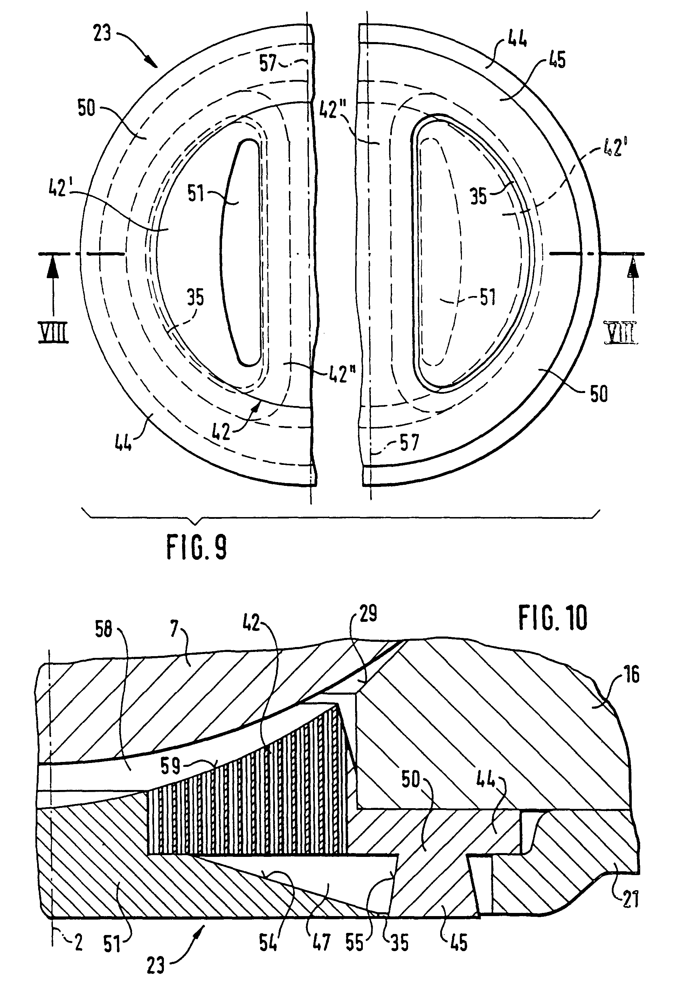

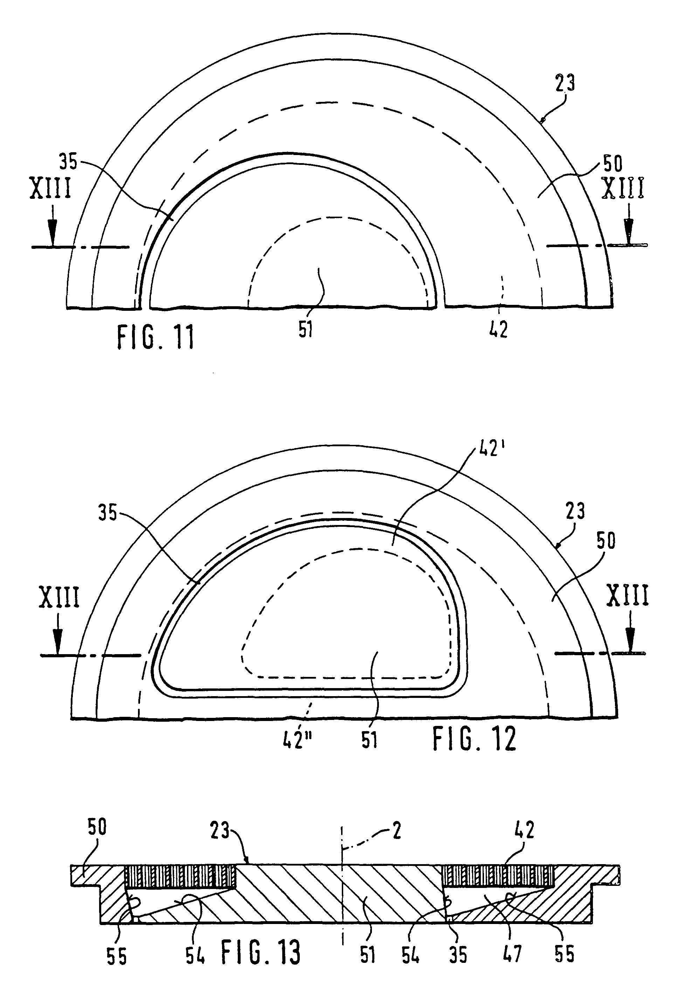

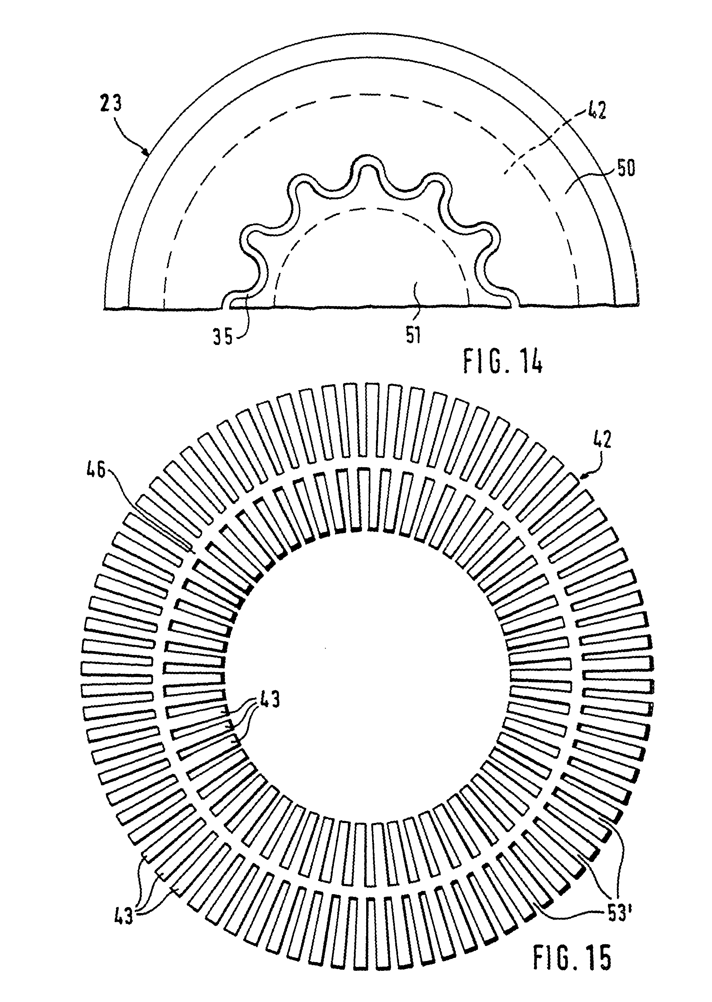

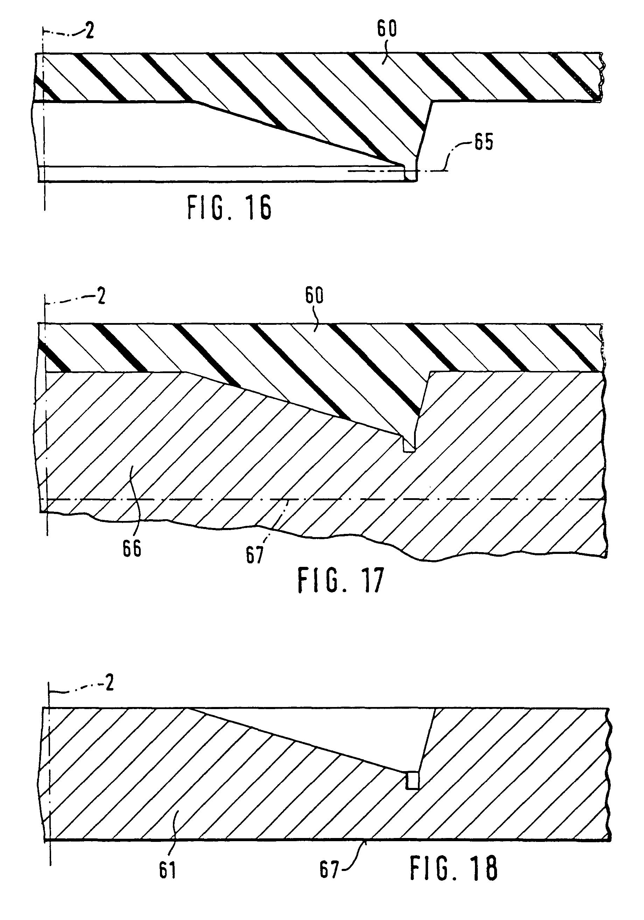

Ausführungsbeispiele der Erfindung sind in der Zeichnung vereinfacht dargestellt und in der nachfolgenden Beschreibung näher erläutert. Es zeigen Figur 1 ein teilweise dargestelltes Einspritzventil mit einer erfindungsgemäßen Düsenplatte, Figur 2A das physikalische Zerstäubungsprinzip an einer Ringspaltdüse, Figur 2B die prinzipielle Form einer mittels Ringspaltdüse erzeugten Lamelle, Figur 3 ein erstes Ausführungsbeispiel einer teilweise dargestellten Düsenplatte im axialen Schnitt, Figur 4 eine Draufsicht auf eine Düsenplatte mit wabenförmige Poren aufweisendem Filter, Figur 5 die Strömungsverhältnisse im Bereich einer Düsenplatte, Figur 6 ein zweites Ausführungsbeispiel einer teilweise dargestellten Düsenplatte im axialen Schnitt, Figur 7 ein drittes Ausführungsbeispiel einer teilweise dargestellten Düsenplatte im axialen Schnitt, Figuren 7A bis 7E fünf Ausführungsbeispiele von Ringspaltversätzen, Figur 8 ein viertes Ausführungsbeispiel einer teilweise dargestellten Düsenplatte im axialen Schnitt, Figur 9 eine kombinierte Draufsicht (links) und Unteransicht (rechts) einer Düsenplatte gemäß Figur 8, Figur 10 ein fünftes Ausführungsbeispiel einer teilweise dargestellten Düsenplatte im axialen Schnitt, Figur 11 ein sechstes Ausführungsbeispiel einer Düsenplatte in einer teilweisen Unteransicht, Figur 12 ein siebentes Ausführungsbeispiel einer Düsenplatte in einer teilweisen Unteransicht, Figur 13 eine Düsenplatte im axialen Schnitt entlang der Linien XIII-XIII in den Figuren 11 und 12, Figur 14 ein achtes Ausführungsbeispiel einer Düsenplatte in einer teilweisen Unteransicht, Figur 15 ein Filter mit Radialschlitzen und Figuren 16 bis 32 Verfahrensschritte zur Herstellung der Düsenplatte gemäß Figur 3.

### Beschreibung der Ausführungsbeispiele

In der Figur 1 ist als ein Ausführungsbeispiel ein Ventil in der Form eines Einspritzventils für Brennstoffeinspritzanlagen von gemischverdichtenden fremdgezündeten Brennkraftmaschinen teilweise dargestellt. Das Einspritzventil hat einen rohrförmigen Ventilsitzträger 1, in dem konzentrisch zu einer Ventillängsachse 2 eine Längsöffnung 3 ausgebildet ist. In der Längsöffnung 3 ist eine z. B. rohrförmige Ventilnadel 5 angeordnet, die an ihrem stromabwärtigen Ende 6 mit einem z. B. kugelförmigen Ventilschließkörper 7, an dessen Umfang beispielsweise fünf Abflachungen 8 vorgesehen sind, verbunden ist.

Die Betätigung des Einspritzventils erfolgt in bekannter Weise, beispielsweise elektromagnetisch. Zur axialen Bewegung der Ventilnadel 5 und damit zum Öffnen entgegen der Federkraft einer nicht dargestellten Rückstellfeder bzw. Schließen des Einspritzventils dient ein angedeuteter elektromagnetischer Kreis mit einer Magnetspule 10, einem Anker 11 und einem Kern 12. Der Anker 11 ist mit dem dem Ventilschließkörper 7 abgewandten Ende der Ventilnadel 5 durch z. B. eine Schweißnaht mittels eines Lasers verbunden und auf den Kern 12 ausgerichtet.

Zur Führung des Ventilschließkörpers 7 während der Axialbewegung dient eine Führungsöffnung 15 eines Ventilsitzkörpers 16. In das stromabwärts liegende, dem Kern 12 abgewandte Ende des Ventilsitzträgers 1 ist in der konzentrisch zur Ventillängsachse 2 verlaufenden Längsöffnung 3 der zylinderförmige Ventilsitzkörper 16 durch Schweißen dicht montiert. An seiner dem Ventilschließkörper 7 abgewandten, unteren Stirnseite 17 ist der Ventilsitzkörper 16 mit einer z.B. topfförmig ausgebildeten Stützscheibe 21 konzentrisch und fest verbunden, die also unmittelbar an dem Ventilsitzkörper 16 anliegt. Die Stützscheibe 21 weist dabei eine ähnliche Form auf wie bereits bekannte topfförmige Spritzlochscheiben, wobei ein mittlerer Bereich der Stützscheibe 21 mit einer gestuften Durchgangsöffnung 22 versehen ist, um in ihr eine erfindungsgemäße Düsenplatte 23 aufzunehmen.

Die Verbindung von Ventilsitzkörper 16 und Stützscheibe 21 erfolgt beispielsweise durch eine umlaufende und dichte, mittels eines Lasers ausgebildete erste Schweißnaht 25. Durch diese Art der Montage ist die Gefahr einer unerwünschten Verformung der Stützscheibe 21 in ihrem mittleren Bereich mit der Durchgangsöffnung 22 und der darin eingebauten Düsenplatte 23 vermieden. Die Stützscheibe 21 ist des weiteren mit der Wandung der Längsöffnung 3 im Ventilsitzträger 1 beispielsweise durch eine umlaufende und dichte zweite Schweißnaht 30 verbunden.

Die Einschubtiefe des aus Ventilsitzkörper 16 und topfförmiger Stützscheibe 21 bestehenden Ventilsitzteils in die Längsöffnung 3 bestimmt die Größe des Hubs der Ventilnadel 5, da die eine Endstellung der Ventilnadel 5 bei nicht erregter Magnetspule 10 durch die Anlage des Ventilschließkörpers 7 an einer Ventilsitzfläche 29 des Ventilsitzkörpers 16 festgelegt ist. Die andere Endstellung der Ventilnadel 5 wird bei erregter Magnetspule 10 beispielsweise durch die Anlage des Ankers 11 an dem Kern 12 festgelegt. Der Weg zwischen diesen beiden Endstellungen der Ventilnadel 5 stellt somit den Hub dar.

Der kugelförmige Ventilschließkörper 7 wirkt mit der sich in Strömungsrichtung kegelstumpfförmig verjüngenden Ventilsitzfläche 29 des Ventilsitzkörpers 16 zusammen, die in axialer Richtung zwischen der Führungsöffnung 15 und der unteren Stirnseite 17 des Ventilsitzkörpers 16 ausgebildet ist.

Die in der Durchgangsöffnung 22 der Stützscheibe 21 angeordnete und durch die Stützscheibe 21 unmittelbar an der Stirnseite 17 des Ventilsitzkörpers 16 festgehaltene Düsenplatte 23 ist in der Figur 1 nur vereinfacht und beispielhaft dargestellt und wird anhand der nachfolgenden Figuren näher beschrieben.

In der Figur 2A ist zunächst das physikalische Zerstäubungsprinzip und das Entstehen einer ringförmigen Lamelle 31 an einer Ringspaltdüse 32 als Prinzipskizze dargestellt, während die Figur 2B die prinzipielle Form der mittels der Ringspaltdüse 32 erzeugten tulpenförmigen Lamelle 31 zeigt. Die Prinzipien der Lamellenbildung von Fluiden sind sehr einfach beispielsweise von einer bekannten Hohlkegeldüse auf eine Ringspaltdüse 32, wie sie in der erfindungsgemäßen Düsenplatte 23 vorliegt, übertragbar. Die Erfindung beruht auf dem Prinzip, ein Brennstoffspray mit möglichst großer Tröpfchengesamtoberfläche zu erzeugen. Eine große Tropfengesamtoberfläche ist gleichbedeutend mit der Aufteilung der Brennstoffmenge in möglichst viele kleine Tröpfchen. Um eine große Tropfengesamtoberfläche zu erzeugen, muß möglichst viel der vorhandenen Strömungsenergie (kinetische Energie im Brennstoffaustritt an der Düse) gegen die Oberflächenspannung im austretenden Brennstoffstrahl eingesetzt werden. Die Oberflächenspannung ist bestrebt, die freie Oberfläche des Fluidstrahls gering zu halten.

Eine Strahlgeometrie mit großer Oberfläche pro Brennstoffmenge ist eine möglichst dünne Flüssigkeitshohllamelle 31, wie sie die Figur 2B besonders gut zeigt. Diese Lamelle 31 wird bei der erfindungsgemäßen Düsenplatte 23 beim Durchtritt durch einen über den Umfang nicht unterbrochenen, engen Ringspalt 35 mit möglichst großem Durchmesser geformt. In stromabwärtiger Richtung erfolgt ein Ausdünnen der Lamelle 31, das durch eine aufgrund der Tulpenform hervorgerufene entsprechende Zunahme des Lamellenumfangs begünstigt wird. Dadurch wird die freie Strahloberfläche weiter vergrößert, und die Lamelle 31 zerfällt in entsprechend kleinere Tröpfchen 38. Außerdem wird die räumliche Tröpfchenpackungsdichte bei größerem Lamellenquerschnitt geringer, wodurch im Brennstoffspray Tröpfchenwiedervereinigungen zu größeren Tropfen (Tröpfchenkoagulationen) weniger wahrscheinlich sind. Der Lamellenzerfall findet ab einem definierten Axialabstand zum Ringspalt 35 statt. Durch aerodynamische Wechselwirkungen mit dem die Lamelle 31 umgebenden Gas wird die Lamellenoberfläche mit größerem Abstand zur Düsenplatte 23 immer stärker wellig (Taylorsche Schwingungen 36), wobei diese Schwingungen 36 in der Figur 2A übertrieben dargestellt sind. Die in der Lamelle 31 vorhandene Instabilität wird mit wachsendem Abstand vom Ringspalt 35 immer größer bis zu einem Punkt 37, an dem ein schlagartiger Zerfall in kleinste Brennstofftröpfchen 38 erfolgt. Von Vorteil ist es bei dieser Anordnung, daß außer der entstehenden Welligkeit der Lamelle 31 kaum andere Störungen auftreten. So werden beispielsweise in der sich stromabwärts verdünnenden Lamelle 31 unerwünschte lokale Verdickungen, sogenannte Strähnen, vermieden.

Trotz der kegelähnlichen Lamellenaufweitung auf einen größeren Durchmesser als an dem Ringspalt 35 ist ein Spraykegelwinkel α relativ klein realisierbar. Dies liegt an der tulpenförmigen Lamellenausbreitung. Der Spraykegelwinkel α ist ein Vollwinkel, der die radiale Lamellenausbreitung widerspiegelt, die sich an einer gedachten Aufprallfläche 39 der Tröpfchen 38 mit einem definierten Abstand x (z.B. 100 mm) von der Düsenplatte 23 ergibt. Dagegen wird der unmittelbar an der Ringspaltdüse 32 auftretende Winkel der Lamelle 31 als Abspritzwinkel β bezeichnet. Aufgrund der Tulpenform der Lamelle 31 ist der Abspritzwinkel β stets größer als der Spraykegelwinkel α. Die Tulpenform ergibt sich aus einem Unterdruckkern im mit Umgebungsgas gefüllten, zentralen Lamellenhohlraum 40. Angetrieben durch die Lamelle 31 entsteht im Gas die Bewegung in Form eines "Hillschen Vortex". Die Wirbelbewegung hat einen Unterdruck zur Folge, welcher die Lamelle 31 in stromabwärtiger Richtung tulpenförmig nach innen "zieht".

Besonders wichtig ist, daß die Lamelle 31 über ihren Umfang ununterbrochen bleibt. Ansonsten entstehen an einer Lamellenrißstelle zwei freie Lamellenenden, welche sich nach der Physik der Oberflächenspannung zu einer dicken Wulst zusammenziehen. Dies hat an solchen Orten größere Tropfen oder Strähnen zur Folge. Zudem wird bei einer Lamellenunterbrechung der tulpenförmige Lamellenverlauf gestört. Die Lamelle 31 verläuft dann eher kegelförmig mit entsprechend größerem Spraykegelwinkel α.

Eine über den Umfang ununterbrochene Lamelle 31 wird durch den in der Düsenplatte 23 vorgesehenen ununterbrochenen Ringspalt 35 erzielt. Damit der sehr enge Ringspalt 35 nicht durch Schmutzpartikel im Brennstoff verstopft werden kann, ist es zweckmäßig, in der Düsenplatte 23 ein Filter 42 anzuordnen. Außerdem ist als Forderung für eine optimale Lamelle 31 an der Zuströmseite des Ringspalts 35 für eine Gleichverteilung des ankommenden Strömungsimpulses über den Umfang zu sorgen.

Damit die geschlossene Lamelle 31 nicht vorzeitig bei zu kleinem Durchmesser zerfällt, muß die Ringspaltinnenströmung laminar aus der Düsenplatte 23 austreten. Strömungsschwankungen sind zu vermeiden, um die labile Lamelle 31 nicht vorzeitig zu Zerfallsschwingungen zu bringen. Genau diese hier aufgezählten Forderungen werden mit der erfindungsgemäßen Düsenplatte 23, die wenigstens einen ununterbrochenen Ringspalt 35 und wenigstens einen Filter 42 beinhaltet, erfüllt.

Die Figur 3 zeigt die Düsenplatte 23 teilweise im axialen Schnitt und im an einem Einspritzventil angebauten Zustand. Die Düsenplatte 23 ist als ebene, flache, kreisförmige, an ihrem Umfang beispielsweise in axialer Richtung gestufte Scheibe ausgeführt. In der Stützscheibe 21 liegt die Düsenplatte 23 zentriert vor. Die Befestigung der Düsenplatte 23 am Einspritzventil und speziell am Ventilsitzkörper 16 erfolgt beispielsweise mittels einer Klemmung, die aufgrund der Kontur der Stützscheibe 21 möglich ist. Eine solche Einspannung als indirekte Befestigung der Düsenplatte 23 am Ventilsitzkörper 16 hat den Vorteil, daß im Gegensatz zu Verfahren wie Schweißen oder Löten eine temperaturbedingte Verformung der feinen Ringspaltgeometrie vollständig vermieden ist. Die gestufte Durchgangsöffnung 22 in der Stützscheibe 21 ist maßlich sehr exakt gefertigt, um die Düsenplatte 23 äußerst genau ohne Spannungen aufnehmen zu können. Anstelle der gestuften Außenkontur kann die Düsenplatte 23 auch eine in axialer Richtung vollständig ebene Außenkontur besitzen.

Durch die erfindungsgemäßen Verfahren zur Herstellung der Düsenplatte 23 ergibt sich eine Struktur, die in axialer Richtung von zwei unmittelbar aufeinanderfolgenden Abschnitten 44 und 45 gebildet wird. Der obere Abschnitt 44 ist dem Ventilschließkörper 7 und dem Ventilsitzkörper 16 zugewandt ausgeführt, während der untere Abschnitt 45 das stromabwärtige, dem Ventilschließkörper 7 abgewandte Ende der Düsenplatte 23 darstellt. Im oberen Abschnitt 44, der beispielsweise einen geringfügig größeren Durchmesser als der untere Abschnitt 45 aufweist, ist unter anderem der Filter 42 vorgesehen. Dagegen zeichnet sich der untere Abschnitt 45 der Düsenplatte 23 durch eine in ihm in stromabwärtiger Richtung mit konvergierenden Seitenflächen ausgebildete Ringkammer 47 und den Ringspalt 35 aus. Entsprechend der äußeren Umfangskontur der Düsenplatte 23 ist auch die Durchgangsöffnung 22 in der Stützscheibe 21 eingeformt. Zumindest in einem radial der Durchgangsöffnung 22 unmittelbar folgenden Klemmbereich 48 weist die Stützscheibe 21 dazu dieselbe axiale Dicke auf wie die Düsenplatte 23. Ansonsten ist die Stützscheibe 21 dünner, beispielsweise mit zwei Dritteln der Dicke des Klemmbereichs 48 ausgebildet. Bei einem Durchmesser von 5 mm besitzt die Düsenplatte 23 z. B. eine Dicke von 350 *µ*m, wobei der obere Abschnitt 44 beispielsweise 150 *µ*m und der untere Abschnitt 45 200 *µ*m stark sind. Diese Größenangaben zu den Abmessungen der Düsenplatte 23 sowie alle weiteren in der Beschreibung angegebenen Maße dienen nur dem besseren Verständnis und schränken die Erfindung in keiner Weise ein.

Die bereits oben erwähnten Forderungen zum Erreichen einer ununterbrochenen, tulpenförmigen Lamelle 31 aus Brennstoff können mit den folgenden Merkmalen der Düsenplatte 23 erfüllt werden:
- feinporige Struktur des Filters 42 im oberen Abschnitt 44 der Düsenplatte 23,
- geringe Wandstärken zwischen den Poren des Filters 42,
- umlaufende, über den Umfang nicht unterbrochene Ringkammer 47 im unteren Abschnitt 45, die sich kontinuierlich in Strömungsrichtung verjüngt,
- umlaufender, ununterbrochener Ringspalt 35 als stromabwärtiger Abschluß der Ringkammer 47.

Der beispielsweise kreisringförmige Filter 42 ist im oberen Abschnitt 44 so angeordnet, daß er außen vollständig in Umfangsrichtung von einem ringförmigen Außenbereich 50 der Düsenplatte 23 umgeben ist und selbst einen inneren kreisförmigen Innenbereich 51 umschließt. Der Außenbereich 50 und der Innenbereich 51 des oberen Abschnitts 44 besitzen über seine axiale Dicke konstante Abmessungen und setzen sich im unteren Abschnitt 45 fort, dort jedoch mit einer veränderten Kontur, um die Ringkammer 47 zu bilden. Die Figur 4 als Draufsicht auf eine erfindungsgemäße Düsenplatte 23 verdeutlicht sehr anschaulich die Anordnung des Filters 42 zwischen dem Innenbereich 51 und dem Außenbereich 50 im oberen Abschnitt 44. Die Feinporigkeit des Filters 42 wird erreicht, indem eine Vielzahl von z.B. parallel zur Ventillängsachse 2 verlaufenden Poren 53, die durch dünne Stege jeweils voneinander getrennt sind, vorgesehen ist. In der Figur 4 sind diese Poren 53 wabenförmig mit dem Querschnitt eines Sechsecks bzw. Sechskants gezeigt. Neben dem wabenförmigen Aufbau des Filters 42 mit sechseckigen Poren 53 sind aber auch Poren mit drei-, vier-, fünf- oder mehreckigen, kreisförmigen oder elliptischen Querschnitten denkbar. In Abhängigkeit von der Größe bzw. Öffnungsweite b des Ringspaltes 35 beträgt die Öffnungsweite einer einzelnen Pore 53 des Filters 42 z. B. 35 *µ*m, während die Wandstärke bis zur nächsten Pore 53 z. B. 10 *µ*m beträgt.

Eine weitere, nicht dargestellte Variante sieht vor, daß sich radial verlaufende und kreisförmig angeordnete Stege in sehr kleinen Abständen immer wieder kreuzen, so daß ein gitterartiges Muster des Filters 42 entsteht. Eine davon etwas abgewandelte Struktur weist der Filter 42 in Figur 15 auf, der beispielsweise aus zwei kreisringförmigen Filterringen 43 unterschiedlichen Durchmessers gebildet wird, wobei der Filterring 43 kleineren Durchmessers von dem äußeren Filterring 43 größeren Durchmessers vollständig umgeben ist und beide Filterringe 43 über einen kreisförmigen Filtersteg 46 verbunden sind. Jeder der beiden Filterringe 43 besteht aus einer Vielzahl von Radialschlitzen 53', die den Poren 53 in den anderen Ausführungsbeispielen entsprechen und durch jeweils schmale Stege voneinander getrennt sind.

Der Filter 42 hat die Funktion, im Brennstoff mitgespülte Schmutzpartikel, die größer als die Ringspaltweite b sind, vom Eintritt in die Düsenplatte 23 fernzuhalten. Der Ringspalt 35 kann so nicht verstopft werden. Bei einer Ringspaltweite b von 50 *µ*m sind also Poren 53 mit Öffnungsweiten von rund 35 *µ*m im Filter 42 sinnvoll. Außerdem ist der Filter 42 ein Strömungsgleichrichter, der die von der Ventilsitzfläche 29 ankommende Fluidströmung beruhigt und somit Turbulenzen, wie Strömungsschwankungen und Wirbel verringert. Eine möglichst turbulenzfreie, laminare Strömung ist am Ringspaltaustritt zur Erzeugung einer stabilen, fein zerstäubenden Flüssigkeitslamelle 31 nötig. Als besonders günstig in Bezug auf die Strömungsgleichrichterwirkung hat sich ein Abmessungsverhältnis von axialer Länge zu Öffnungsweite der Poren 53 von 4:1 herausgestellt, so daß sich bei einer Dicke des oberen Abschnitts 44 der Düsenplatte 23 von 150 *µ*m, die der axialen Länge der Poren 53 entspricht, wieder die bereits erwähnte Öffnungsweite von rund 35 *µ*m ergibt. Außer den genannten Funktionen hat der Filter 42 auch eine Stabilitätsfunktion, da er die einzige Verbindung zwischen Außenbereich 50 und Innenbereich 51 ist und somit die Düsenplatte 23 zusammenhält. Ansonsten würde die Düsenplatte 23 aus zwei separaten Teilen bestehen, die getrennt am Einspritzventil zu befestigen wären.

In der Figur 5 sind in einer vergrößerten Darstellung die Strömungsverhältnisse zwischen Ventilsitzfläche 29 und Ringspalt 35, vor allen Dingen in der Ringkammer 47 erkennbar. Die durch die vielzähligen Filterporen 53 in die Ringkammer 47 eintretenden Einzelströme liegen unmittelbar stromabwärts des Filters 42 getrennt voneinander vor. Sie benötigen eine Durchmischungsstrecke, die durch die Ringkammer 47 in idealer Form gegeben ist. Die Ringkammer 47 ist hauptsächlich durch eine innere flache Wandung 54 und eine äußere steile (z.B. auch senkrechte) Wandung 55 gekennzeichnet. Da die innere Wandung 54 unmittelbar stromabwärts des Filters 42 ausgebildet ist und die Einzelströme in Richtung zu der inneren Wandung 54 hin gerichtet sind, dient die Wandung 54 als Prall-, Umlenkungs- bzw. Abströmfläche. Die steile Wandung 55 ist dagegen radial versetzt zum Filter 42 ausgeformt und begrenzt den Außendurchmesser der Ringkammer 47.

Über den Querschnitt der Ringkammer 47 wird die Strömung somit homogenisiert. In den Ringspalt 35 muß nämlich eine homogene Strömung eintreten, damit eine gleichmäßige, fein zerstäubende Flüssigkeitslamelle 31 ohne Strähnen aus ihm austritt. Nachteilige Strähnen in der Lamelle 31 könnten dann auftreten, wenn die durch den Filter 42 erzeugten Einzelströme bis in den Ringspalt 35 vordringen. Die innere Wandung 54 und die äußere Wandung 55 laufen also in stromabwärtiger Richtung aufeinander zu bis zum Ringspalt 35, womit eine kontinuierliche Querschnittsverjüngung verbunden ist, so daß das Fluid stetig beschleunigt wird. Durch diese Strömungsbeschleunigung wird zusätzlich Turbulenz in der Strömung abgebaut. Die Geometrie der Ringkammer 47 garantiert, daß sich ein Großteil der Strömung an die flache innere Wandung 54 anlegt bzw. an ihr geführt wird. Die Strömung erhält dadurch einen starken Radialgeschwindigkeitsanteil in Richtung Ringspalt 35. Trotz des sich anschließenden, herstellungsbedingt (MIGA-Technik) senkrecht, also parallel zur Ventillängsachse 2, verlaufenden Ringspalts 35 hat die austretende Lamelle 31 noch einen Radialgeschwindigkeitsanteil. Dies ist auch nötig, um die Lamelle 31 stromabwärts der Düsenplatte 23 in ihrem Durchmesser tulpenförmig aufzuweiten.

Der ununterbrochene Ringspalt 35 stellt die Austrittsöffnung der Ringkammer 47 dar. Der Ringspaltdurchmesser d ist möglichst groß zu wählen, so daß er, wie in den Figuren 3 und 5 erkennbar, beispielsweise noch größer als der Außendurchmesser des Filters 42 ist. Üblicherweise wird der Ringspaltdurchmesser d zwischen 0,5 und 5 mm betragen. Für eine genügend dünne Flüssigkeitslamelle 31 und eine ausreichend feine Zerstäubung sollte die Ringspaltweite b 50 *µ*m nicht überschreiten. Die untere Grenze für die Ringspaltweite b beträgt ca. 25 *µ*m. Die Ringspaltweite b muß in den zulässigen Grenzen mit dem Ringspaltdurchmesser d auf die jeweils vorgegebene Durchflußmenge eingestellt werden, da die Ringspaltquerschnittsfläche in direkter Beziehung zu der Durchflußmenge steht. Die axiale Erstreckung des Ringspalts 35, also die Ringspalthöhe h, ist geringer als die Ringspaltweite b (h < b), damit die aus der Ringkammer 47 ankommende Strömung nicht voll ihre Radialgeschwindigkeitskomponente durch zu starke senkrechte, axiale Ausrichtung verliert. Mit dem Verhältnis Ringspalthöhe h zu -weite b kann der Spraykegelwinkel α der Lamelle 31 gezielt variiert werden, der um so größer ist, je kleiner das Verhältnis h:b ist. Mit einer Veränderung der Ringspalthöhe h ist also eine Variation des Abspritzwinkels β und somit des Spraykegelwinkels α der Lamelle 31 möglich. Eine Variation der Ringspalthöhe h bei konstanter Ringspaltweite b führt jedoch nur zu unwesentlichen Durchflußänderungen, da die Strömung im Ringspalt 35 aufgrund der Geometrie der inneren Wandung 54 der Ringkammer 47 einseitig abgelöst ist, und zwar an der aus der inneren Wandung 54 hervorgehenden Seite des Ringspalts 35. Unmittelbar am Austritt des Brennstoffs aus dem Ringspalt 35 besitzt die Lamelle 31 z. B. eine Dicke bzw. Filmstärke von 2/3 b, während sie beim Zerfall in kleine Tröpfchen 38 nahe dem Punkt 37 nur noch eine Dicke von < 1/2 b aufweist.

Mit dem in der Figur 3 gezeigten Ausführungsbeispiel läßt sich ein rotationssymmetrischer tulpenförmiger Hohlkegelstrahl (Lamelle 31) erzeugen. Diese Strahlverläufe sind besonders geeignet für Einspritzventile, die auf ein Einlaßventil pro Zylinder einer Brennkraftmaschine abspritzen. Der Ringspalt 35 hat einen relativ großen Durchmesser d, damit bei engem Ringspalt 35 große statische Durchflußmengen erzielt werden. Da der Filter 42 einen kleineren Außendurchmesser hat als der Ringspalt 35, ist eine anströmseitige Ringspaltverdeckung durch den Außenbereich 50 gegeben, die mit dafür sorgt, daß die Strömung gezwungen ist, in der Ringkammer 47 eine Radialkomponente in Richtung Ringspalt 35 anzunehmen.

Ein weiteres Ausführungsbeispiel einer Düsenplatte 23 ist in der Figur 6 dargestellt, das sich von dem in der Figur 3 gezeigten Ausführungsbeispiel hauptsächlich durch eine Reduzierung der axialen Dicke der Düsenplatte 23 unterscheidet. Der untere Abschnitt 45 weist z. B. nur noch dieselbe Dicke wie der obere Abschnitt 44 auf oder ist sogar dünner als dieser Abschnitt 44. Somit ist auch die Ringkammer 47, speziell die innere Wandung 54, noch flacher, wodurch der Spraykegelwinkel α der Lamelle 31 vergrößert wird. Außerdem ist es möglich, die aus dem Filter 42 eintretenden Einzelströme in der Ringkammer 47 durch noch stärkere Umlenkung gleichmäßiger miteinander zu einer homogenen Strömung zu vermischen. Da die Düsenplatte 23 dünner als beim ersten Ausführungsbeispiel ist, liegt sie bei gleicher Stützscheibe 21 vertieft in der Durchgangsöffnung 22 der Stützscheibe 21. Die sensible Ringspaltaustrittsgeometrie ist somit gut gegen mechanische Einwirkungen von außen geschützt. Bei Düsenplatten 23, die eine vollständig ebene, senkrechte Außenkontur aufweisen, ist es sinnvoll, daß die Stützscheibe 21 bei 56 die Düsenplatte 23 teilweise untergreift und die Durchgangsöffnung 22 der Stützscheibe 21 dann in diesem Bereich kleiner als die Düsenplatte 23 selbst ist (angedeutet mit einer Strichlinie).

Die Figur 7 zeigt ein Ausführungsbeispiel einer Düsenplatte 23 mit kleinerem Ringspaltdurchmesser d. Eine solche Ausbildung ist für kleine statische Durchflußmengen nötig, um den unteren Grenzwert für die Ringspaltweite b nicht unterschreiten zu müssen. Da der Ringspalt 35 nun nicht mehr versetzt zum Filter 42 ausgebildet ist, sondern direkt stromabwärts einzelner Poren 53 vorgesehen ist, kann der Brennstoff zumindest teilweise parallel zur Ventillängsachse 2 direkt die Ringkammer 47 durchströmen, so daß die Strömung mit geringerer Radialumlenkung in den Ringspalt 35 eintritt. Falls dadurch der Spraykegelwinkel α zu klein wird, könnte direkt stromauf des Ringspalts 35 eine Abdeckung vorgesehen werden, so daß der Ringspalt 35 anströmseitig wieder verdeckt ist und die Strömung auf kleinerem Durchmesser in die Ringkammer 47 einströmt.

Besonders vorteilhaft bei dieser Anordnung mit direkt stromabwärts des Filters 42 ausgebildetem Ringspalt 35 ist ein axialer Ringspaltversatz, d.h. es existiert ein axiales Abstandsmaß zwischen einer stromabwärtigen Begrenzungsfläche 52 des Außenbereichs 50 und einer stromabwärtigen Begrenzungsfläche 52' des Innenbereichs 51. Dieser Ringspaltversatz sieht bei dem in der Figur 7 dargestellten Ausführungsbeispiel so aus, daß der Übergang der inneren Wandung 54 der Ringkammer 47 in die eine Flanke des Ringspaltes 35 weiter stromabwärts liegt als der Übergang der äußeren steilen, z.B. auch senkrechten Wandung 55 in die andere Flanke des Ringspaltes 35. Diese axiale Verschiebung des Innenbereichs 51 gegenüber dem Außenbereich 50 ist beispielsweise so groß, daß der Übergang der inneren Wandung 54 in die Flanke des Ringspaltes 35 in derselben Ebene wie die stromabwärtige Begrenzungsfläche 52 des Außenbereichs 50 liegt. Der Ringspaltversatz führt dazu, daß die durch die Anordnung des Ringspaltes 35 direkt stromabwärts des Filters 42 verminderte Radialgeschwindigkeitskomponente der Strömung wieder vergrößert wird. Außerdem wird eine bessere Laminarität der Strömung erreicht, die wiederum für eine verbesserte Zerstäubung des Brennstoffs ausschlaggebend ist. Weiterhin ergibt sich in vorteilhafter Weise eine größere Beeinflußbarkeit des Abspritzwinkels β in Abhängigkeit der Größe des Ringspaltversatzes.

Aus strömungstechnischer Sicht ist es besonders vorteilhaft, einen axialen Ringspaltversatz vorzusehen. Die Strömungslauflänge im engsten Querschnitt des Ringspalts 35 ist nämlich auf ein Minimum herabgesetzt, da sich die Flanken des Ringspalts 35 nicht mehr über die Ringspalthöhe h unmittelbar gegenüberstehen. Fünf Beispiele von Ringspaltversätzen sind in den Figuren 7A bis 7E vereinfacht dargestellt. In den Figuren 7A bis 7C besitzen die beiden Wandungen 54 und 55 eine entgegengesetzte Neigung, so wie sie auch in den bisherigen Figuren gezeigt sind. Die Düsenplatte 23 in der Figur 7A unterscheidet sich von den bisher dargestellten Düsenplatten 23 hauptsächlich dadurch, daß die beiden Begrenzungsflächen 52 und 52' um die Ringspaltflankenhöhe h' axial voneinander entfernt liegen. Auf beiden Seiten des Ringspalts 35 wurden also die senkrechten Flanken belassen, in die die Wandungen 54 und 55 übergehen. In dem in der Figur 7B gezeigten Ausführungsbeispiel besitzt nur noch der Innenbereich 51 eine senkrechte Flanke mit der Ringspaltflankenhöhe h', während die äußere Wandung 55 des Außenbereichs 50 direkt in die Begrenzungsfläche 52 ohne Flanke übergeht. Der axiale Abstand zwischen den beiden Begrenzungsflächen 52 und 52' ist dabei wieder genau die Ringspaltflankenhöhe h'.

Dagegen wird der axiale Versatz der beiden Begrenzungsflächen 52 und 52' bei der Düsenplatte 23 in Figur 7C von der Ringspaltflankenhöhe h' und einem Versatz e gebildet. Der Versatz e ist dabei das axiale Maß zwischen der Begrenzungsfläche 52 des Außenbereichs 50 und dem Übergang von innerer Wandung 54 in die senkrechte Flanke des Innenbereichs 51.

Die Ringspaltversätze in den Figuren 7D und 7E entsprechen prinzipiell den Anordnungen der Figuren 7B und 7C; die Düsenplatten 23 unterscheiden sich jedoch in der Neigung der äußeren Wandung 55 des Außenbereichs 50. Die äußere Wandung 55 besitzt nun eine Neigungsrichtung mit umgekehrten Vorzeichen gegenüber den bereits beschriebenen Beispielen, die aber der Richtung der inneren Wandung 54 entspricht, wobei sich die beiden Wandungen 54 und 55 noch in ihrer Steilheit, also ihrem Winkel bezüglich der Ventillängsachse 2 voneinander unterscheiden. Gerade bei Düsenplatten 23 mit gleichgerichteten Wandungen 54 und 55 kann die Radialkomponente der Strömung verstärkt werden. Es entsteht eine Lamelle 31 mit breiterer Tulpenform. Die Turbulenzen in der Lamelle 31 werden weiter verringert. Die Düsenplatten 23 mit dem Versatz e (Figuren 7C und 7E) besitzen den Vorteil, daß durch Variation des Versatzes e eine sehr gute Beeinflußbarkeit des Abspritzwinkels β gegeben ist. Aus strömungstechnischer Sicht ist deshalb die in der Figur 7E dargestellte Variante des Ringspaltversatzes die beste Lösung.

In den Figuren 7A und 7E sind zudem die Wandungen 54 in modifizierter Weise dargestellt. Neben der flachen geneigten Wandung 54 wird die Ringkammer 47 auch durch eine ebene, waagerechte, dem Ringspalt 35 abgewandte Prallfläche 54' des Innenbereichs 51 stromabwärts des Filters 42 begrenzt. Diese Ausbildung des Innenbereichs 51 sorgt für eine Verringerung des Totvolumens in der Ringkammer 47 und bewirkt eine Reduzierung von Wirbeln in der Strömung, so daß eine weitere Verbesserung der Laminarität der Lamelle 31 erzielt wird. Alle hier beschriebenen Ringspaltversätze sind auch bei den anderen Ausführungsbeispielen der Düsenplatten 23 denkbar.

Ein weiteres Ausführungsbeispiel einer erfindungsgemäßen Düsenplatte 23 zeigen die Figuren 8 und 9, wobei die Figur 8 eine Schnittdarstellung entlang der Linie VIII-VIII in Figur 9 ist. Die Figur 9 ist dabei eine kombinierte Zeichnung, die von einer Draufsicht (links) und einer Unteransicht (rechts) dieser Düsenplatte 23 gebildet ist. Als besonderes Merkmal weist die Düsenplatte 23 hierbei zwei ununterbrochene Ringspalte 35 auf, wobei in der Figur 8 nur ein Ringspalt 35 zu sehen ist. Die Düsenplatte 23 ist auf beiden Seiten der im axialen Schnitt (Figur 8) sichtbaren Ventillängsachse 2 identisch ausgeformt, wobei auch die Drauf- bzw. Unteransicht (Figur 9) auf die Düsenplatte 23 durch eine Symmetrieachse 57 in zwei gleich aussehende Hälften geteilt ist. Aus der Figur 9 ist sehr gut zu entnehmen, daß der Ringspalt 35 in jeder Plattenhälfte ununterbrochen ausgeführt ist und dabei die Form eines verzerrten Ovals besitzt. Diese Ringspaltanordnung hat zur Folge, daß der Filter 42 und die Ringkammer 47 in abgewandelter Form ausgebildet sein müssen. Der obere Abschnitt 44 sieht im Schnitt nun so aus, daß in radialer Richtung vom Umfang ausgehend betrachtet der Außenbereich 50, der Filter 42 mit einem ersten Filterbereich 42', der Innenbereich 50 und ein zweiter innerer Filterbereich 42'' aufeinanderfolgen.

Die beiden Filterbereiche 42' und 42'' sind allerdings zusammenhängend ausgebildet und stellen einen einteiligen Filter 42 dar. Unterbrochen ist der in der Außenkontur kreisförmige Filter 42 im Inneren zweimal durch den Innenbereich 51, der ebenfalls eine verzerrte ovale Form aufweist und vom Filter 42 vollständig umgeben ist. Auch die Ringkammer 47 liegt nun in modifizierter Weise vor, da sie entsprechend der Anordnung des Filters 42 ebenfalls über einen äußeren und inneren Bereich verfügen muß, die miteinander direkt verbunden sind. Hauptsächlich ist die Ringkammer 47 dadurch gekennzeichnet, daß sich im äußeren Bereich, wie bisher bei den anderen Ausführungsbeispielen beschrieben, die innere und die äußere Wandung 54 und 55 vom Filterbereich 42' vollständig bis zum Ringspalt 35 erstrecken, während in dem inneren Bereich der Ringkammer 47 die innere Wandung 54 nicht bis zum Filterbereich 42" reicht, da aufgrund der Symmetrie entlang der Symmetrieachse 57 beidseitig über den zweiten Filterbereich 42' ' einströmender Brennstoff auf die zur Symmetrieachse 57 zugewandten Abschnitte beider Ringspalte 35 aufgeteilt werden soll.

Aus jedem der beiden Ringspalte 35 tritt eine Hohlkegellamelle aus, die nicht rotationssymmetrisch ist. Die Geometrie der Düsenplatte 23 und besonders der Ringspalte 35 verursacht Lamellen 31, deren Mittelachsen nicht parallel zur Ventillängsachse 2 verlaufen. Vielmehr existiert zwischen der Ventillängsachse 2 und jeder Mittelachse der Lamelle 31 ein definierter Divergenzwinkel, so daß die zwei Lamellen 31 in Form von zwei Strahlästen in stromabwärtiger Richtung divergieren. Eine solche Düsenplatte 23 ist in Verbindung mit einer Multi-Point-Einspritzung besonders dann geeignet, wenn mit einem Einspritzventil auf je zwei Einlaßventile pro Zylinder einer Brennkraftmaschine gespritzt werden soll. Es ist dafür zu sorgen, daß sich durch geeignete Winkelabstimmung die zwei Lamellen 31 nicht überschneiden, da ansonsten der Einzellamellenzerfall zu früh, d. h. bei ungenügend ausgedünnter Lamelle 31, stattfindet.

In der Figur 10 ist ein Ausführungsbeispiel der Düsenplatte 23 teilweise dargestellt, das eine von der bisher gezeigten, ebenen Scheibenform abweichende Kontur aufweist. Die Düsenplatte 23 unterscheidet sich von den anderen beschriebenen Ausbildungen dahingehend, daß der Filter 42 in axialer Richtung keine konstante Erstreckung aufweist. Vielmehr ist eine dem Ventilschließkörper 7 zugewandte Filterfläche 59 muldenförmig ausgebildet, während der Filter 42 auf seiner anderen Seite mit dem oberen Abschnitt 44 in einer Ebene endet. Die muldenförmige Filterfläche 59 besitzt z. B. einen Radius, der in etwa dem Radius des kugelförmigen Ventilschließkörpers 7 entspricht. Somit ergibt sich ein kleiner, fast parallel verlaufender Zwischenraum zwischen Ventilschließkörper 7 und Düsenplatte 23, der ein sogenanntes Totvolumen 58 darstellt. Der Hauptgedanke zur Gestaltung dieses Ausführungsbeispiels liegt nämlich genau darin, das zwischen dem Ventilschließkörper 7 und der Düsenplatte 23 bzw. dem Ventilsitzkörper 16 gebildete Totvolumen 58 zu verkleinern. Der Filter 42 kann so an seiner axial dicksten Stelle nahe dem Ventilsitzkörper 16 eine mehr als doppelt so große Ausdehnung als der eigentliche scheibenförmige obere Abschnitt 44 besitzen. Der obere Abschnitt 44 ist mit seinem Außenbereich 50 und seinem Innenbereich 51 jeweils so ausgebildet, daß ein direkter Übergang von der Filterfläche 59 des Filters 42 vorhanden ist, der zum Außenbereich 50 hin jedoch unter einem scharfen, z. B. 90° besitzenden Winkel erfolgt.

Die Größe des Totvolumens 58 spielt eine entscheidende Rolle bei der Heißbenzinproblematik. Ein großes Totvolumen 58 birgt immer auch eine vergrößerte Gefahr einer Dampfblasenbildung im Brennstoff, die mit dieser erfindungsgemäßen Anordnung reduziert werden soll. Als ein weiterer Vorteil ergibt sich aus der Annäherung der Düsenplatte 23 an die Ventilsitzfläche 29 bei Verkleinerung des Totvolumens 58 eine Strömungsberuhigung des Brennstoffs stromaufwärts der Düsenplatte 23. Die Verwirbelung des Brennstoffs läßt sich bei entsprechender Konfiguration deutlich herabsetzen. Die Herstellung einer solchen Düsenplatte 23 ist kaum schwieriger als bei den bereits genannten Düsenplatten 23, da als Werkzeug zur Fertigung des unteren Abschnitts 45 genau dasselbe Werkzeug verwendet werden kann und der obere Abschnitt 44 mit dem Filter 42 heutzutage mittels bekannter LIGA-Technik problemlos fertigbar ist.

Anstelle eines kreisförmigen Ringspalts 35 (Figuren 3, 6, 7, 10) kann auch ein einzelner, elliptischer Ringspalt 35 in der Düsenplatte 23 vorgesehen sein. Entsprechend der Größe der Abweichung von einer Kreisform lassen sich so im Querschnitt ovale Flachstrahlen erzeugen.

In der Figur 11 ist ein teilweise Unteransicht auf ein weiteres Ausführungsbeispiel einer Düsenplatte 23 dargestellt. Dieses Ausführungsbeispiel beweist, daß der kreisförmige Ringspalt 35 nicht konzentrisch um die Ventillängsachse 2 ausgebildet sein muß. Der Ringspalt 35 verläuft vielmehr vom Filter 42 jeweils überdeckt sowohl stromabwärts des inneren, den Innenbereich 51 abschließenden Randes des Filters 42 als auch um 180° weiter stromabwärts des äußeren, den Außenbereich 50 berührenden Randes des Filters 42. Entsprechend wandert auch der Ringspalt 35 über 180° einmal über die gesamte Breite (radiale Erstreckung) der Ringkammer 47. Die Ringkammer 47 verändert in Umfangsrichtung nämlich kontinuierlich ihre Gestalt, so daß ausgehend von einem Punkt, an dem die innere Wandung 54 flach und die äußere Wandung 55 steil ausgebildet ist, der Ringspalt 35 in Richtung Ventillängsachse 2 nach innen wandert, womit auch die Wandungen 54 und 55 bald dieselbe Neigung besitzen (im Winkel von 90° vom Ausgangspunkt). Nach 180° ist dann eine Umkehrung eingetreten, d.h. die innere Wandung 54 ist nun steil und die äußere Wandung 55 flach. Durch diese Ausbildung der Ringkammer 47 und des Ringspaltes 35 entsteht eine Lamelle 31, deren Mittelachse nicht senkrecht zur Düsenplatte 23 bzw. nicht parallel zur Ventillängsachse 2 verläuft. Somit wird ein Schiefstrahl erzeugt. Nützlich ist ein Schiefstrahlventil, wenn ein Einspritzventil aus konstruktiven Gründen nicht beliebig geneigt in das Saugrohr einer Brennkraftmaschine eingebaut werden kann. Kann die Einbauneigung nicht so angepaßt werden, daß die Ventillängsachse 2 in ihrer Verlängerung auf das Einlaßventil zielt, ist es jedoch mit einem solchen Schiefstrahl bei entsprechender Neigung möglich, das Einlaßventil direkt zu treffen.

Die in der Figur 12 gezeigte teilweise Unteransicht einer weiteren Düsenplatte 23 stellt eine Kombination der Ausführungsbeispiele gemäß den Figuren 9 und 11 dar. Die Düsenplatte 23 besitzt dementsprechend zwei Ringspalte 35, die eine von einer Kreisform abweichende Kontur aufweisen. Auch hierbei ist die Ringkammer 47 über ihren Umfang mit einer veränderlichen Struktur ausgestaltet, so daß der Ringspalt 35 wiederum über die radiale Breite des ihn überdeckenden Filters 42 wandert. Da nun zwei gegenüber der Ventillängsachse 2 geneigte Schiefstrahlen bzw. Lamellen 31 stromabwärts der Düsenplatte 23 gebildet werden, eignet sich dieser Aufbau besonders zum Abspritzen auf zwei Einlaßventile pro Zylinder einer Brennkraftmaschine, auf die aufgrund ungünstiger Einbauverhältnisse sonst nicht direkt gezielt werden könnte.

Die Figur 13 ist eine Schnittdarstellung entlang der Linien XIII-XIII in den Figuren 11 und 12, die nochmals das Wandern des Ringspaltes 35 in bezug auf den Filter 42 und die Umkehrung der Neigungen der Wandungen 54 und 55 der Ringkammer 47 nach 180° verdeutlicht.

Neben elliptischen oder kreisförmigen Ringspalten 35 sind auch noch völlig andere, z. B. mäanderförmige Ringspaltverläufe denkbar (Figur 14). Dabei sollten die Ringspalte 35 aber auf jeden Fall ununterbrochen verlaufen und keine "Knicke", also z. B. 90°-Winkel aufweisen, da ansonsten dort die Lamelle 31 aufgespalten würde. Um einen Flachstrahl mit einer kreisförmigen Ringspaltgeometrie erzeugen zu können, besteht die Möglichkeit der Ringspaltweitenvariation b über den Umfang des Ringspalts 35. Der Außendurchmesser des Ringspalts 35 ist z. B. konstant, so daß sich die äußere Flanke des Ringspalts 35 kreisförmig erstreckt; der Innendurchmesser ist dagegen nicht konstant, so daß die innere Flanke des Ringspalts 35 eine elliptische Form aufweist, wodurch die Ringspaltweite b veränderlich ist. Die Umkehrung der elliptischen/kreisförmigen Form der Flanken auf die jeweils andere ist ebenso denkbar.

Anhand der Figuren 16 bis 32 wird das Herstellungsverfahren der Düsenplatte 23, speziell des in der Figur 3 gezeigten Ausführungsbeispiels verdeutlicht. An die Qualität der Düsenplatte 23 sind sehr hohe Anforderungen gestellt, um die gewünschten Brennstofflamellen 31 zu erzeugen, die wiederum ein Garant für sehr kleine entstehende Brennstofftröpfchen 38 sind. Deshalb sind sehr glatte, gratfreie Oberflächen nötig, um Strömungsturbulenzen zu vermeiden. Außerdem muß der enge Ringspalt 35 in seiner Ringspaltweite b eng toleriert werden. Eine Abweichung von 1 *µ*m von einer vorgegebenen Ringspaltweite b kann schon ca. 3 % Durchflußabweichung bedeuten. In großen Stückzahlen darf der Durchfluß nur äußerst gering streuen. Diese genannten Anforderungen sollen zwecks kosteneffizienter Herstellung bei großen Stückzahlen, z. B. 100000 Stück/Tag, wiederholbar erfüllt werden können.

Als besonders zweckmäßig erweist sich dafür die sogenannte MIGA-Technik (Mikrostrukturierung, Galvanoformung, Abformung). In einem ersten Verfahrensschritt (Figur 16) wird eine Urform 60 als Negativform des späteren unteren Abschnitts 45 z. B. in einem thermoplastisch verformbaren Kunststoff (besonders geeignet ist Polymethylmethacrylatabgekürzt PMMA) gefertigt, die bereits sehr genaue Konturen vor allen Dingen hinsichtlich des Ringspalts 35 sowie der inneren und äußeren Wandung 54 und 55 aufweist. Als Herstellungsverfahren für die Urform 60 in PMMA eignen sich besonders wegen der hohen Präzision das Diamantdrehen als mechanische Mikrobearbeitung bzw. das Ablatieren mittels Excimerlasers. Die Urform 60 wird zur Herstellung eines Prägestempels 61 (Figur 18) benötigt, der wiederum in einem späteren Verfahrensschritt zur Fertigung der Düsenplatte 23 eingesetzt wird. Das Herstellen der Urform 60 als mikrostrukturiertes Teil mit einer Dicke von beispielsweise 350 *µ*m, also einer sehr dünnen Folie, und dreidimensionalen Strukturen ist vergleichsweise kostenintensiv. Erst sehr hohe Stückzahlen führen also zu einer rentablen Fertigung.

Deshalb soll die Urform 60 so exakt bearbeitet sein, daß der an ihr abgeformte Prägestempel 61 mindestens zehntausendmal bei gleichbleibender Qualität einsetzbar ist.

Der z. B. zur Herstellung der Urform 60 verwendete Excimerlaser zeichnet sich durch eine sehr hohe Leistungsdichte und eine kurze Wellenlänge (typisch λ = 193 nm) aus. Das Ablatieren, also ein explosionsartig stattfindendes, volumenmäßiges Abtragen von Material ist nur aufgrund der hohen Leistungsdichte des Lasers möglich. Dieses völlig spanfreie Abtragverfahren ist durch seine extrem genau fertigbaren Konturen besonders geeignet. Anstelle von PMMA als Material für die Urform 60 ist als Werkstoff auch Kupferberyllium CuBe2 einsetzbar. In der Figur 16 ist mit einer Strichlinie eine Abspritzebene 65 eingezeichnet, die andeuten soll, daß der Bereich des Ringspalts 35 als Negativ in der Urform 60 mit einer deutlich vergrößerten Höhe ausgebildet ist, um eine einfachere Handhabung in weiteren folgenden Verfahrensschritten zu garantieren.

In einem nächsten, in der Figur 17 verdeutlichten Verfahrensschritt wird auf die Urform 60 als Negativform in einem galvanischen Bad eine Schicht 66 aufgebracht. Die Schicht 66 besteht dabei beispielsweise aus Nickel oder Nickellegierungen, insbesondere aus NiCo. Durch die galvanische Abscheidung der Schicht 66 wird durch das Dickenwachstum der Schicht 66 ein Oberflächenrelief erzeugt, das die Konturen der Urform 60 nachzeichnet. Die Schichtdicke der Schicht 66 beträgt beispielsweise mehr als 200 *µ*m an ihrer dicksten Stelle. Die Schicht 66 legt sich durch das Galvanisieren eng an die Urform 60 an, so daß die vorgegebenen Konturen, insbesondere die Ringkammer 47 und der Ringspalt 35 formtreu in ihr reproduziert werden. Eine in der Figur 17 gezeigte Schleiflinie 67 deutet an, wo das Werkzeug in Form des Prägestempels 61 planarisiert werden soll. Aus der Schicht 66 wird nämlich durch entsprechende Bearbeitung, beispielsweise Fräsen oder Schleifen, entlang der Schleiflinie 67 der Prägestempel 61 geformt. Außerdem beinhaltet dieser Verfahrensschritt noch das Entformen der Urform 60. Die Figur 18 zeigt den Prägestempel 61 nach dem Schleifen und Entformen. Bei Verwendung von PMMA für die Urform 60 eignet sich besonders Essigsäureethylester (C₂H₅OCOCH₃) zum Ablösen. Eine weitere Möglichkeit des Entformens stellt ein mechanisches Trennen dar. Bei Verwendung von CuBe2 für die Urform 60 ist es jedoch notwendig, noch vor dem Galvanisieren (Figur 17) eine Metallschicht (z. B. Chrom) auf der Urform 60 aufzubringen, um ein mechanisches Trennen von Urform 60 und Prägestempel 61 maßgenau zu erreichen. Der nach diesen Verfahrensschritten hergestellte und in der Figur 18 dargestellte Prägestempel 61 soll nun, wie bereits erwähnt, wenigstens zehntausendmal als Werkzeug verwendet werden können. Da gleichzeitig eine Vielzahl von Urformen 60 als Mikrostrukturteile hergestellt wird (z. B. auf einem waferähnlichen Nutzen), kann auch durch die Galvanisierung der Schicht 66 und die anschließende Entformung gleichzeitig eine Vielzahl von Prägestempeln 61 gefertigt werden, von denen jeder in oben beschriebener Form sehr oft einsetzbar ist. Die Vereinzelung erfolgt mittels bekannter Verfahren, z. B. Präzisionssägen.

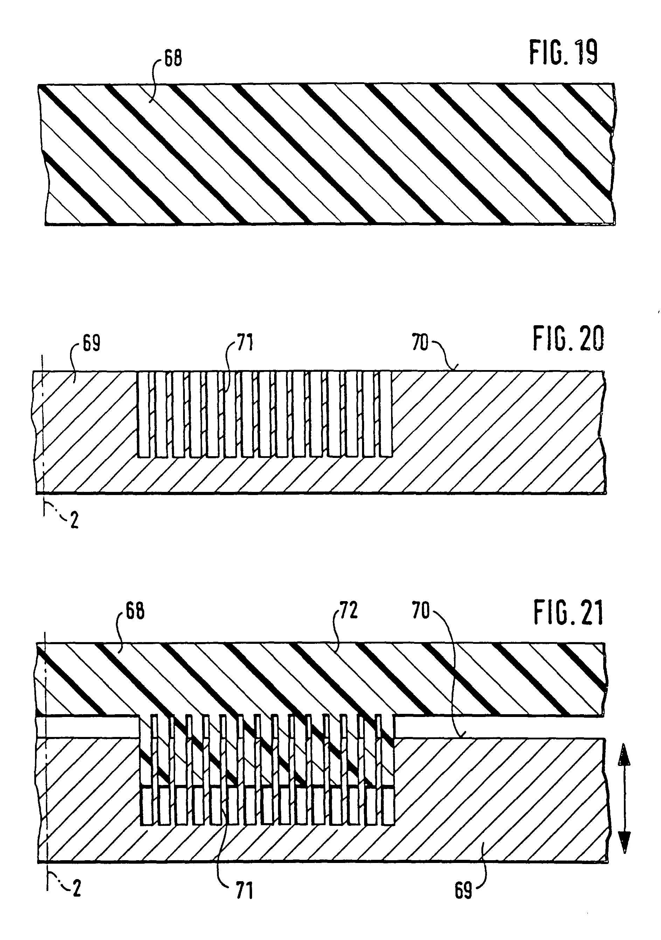

Zur Herstellung des oberen Abschnitts 44 der Düsenplatte 23 wird von einer üblichen Platte 68 aus Polymethylmethacrylat (PMMA) ausgegangen (Figur 19). In der Figur 20 ist ein Prägewerkzeug 69 dargestellt, das bereits eine für den Filter 42 notwendige Struktur 71, z. B. eine Wabenstruktur, aufweist und mittels bekanntem LIGA-Verfahren hergestellt ist. Dabei wird in allgemein bekannter Form z.B. eine Synchrotronstrahlung erzeugt. Die Synchrotronstrahlung wird nach der bekannten LIGA-Technik verwendet, nach der ein Kunststoff mit der Synchrotronstrahlung behandelt werden kann, anschließend belichtet und entwickelt wird, so daß die nicht mit Synchrotronstrahlen behandelten Bereiche des Kunststoffs als Oberflächenstrukturen zur Verfügung stehen. Die Galvanoformung und die Entformung müssen so genau erfolgen, daß die gewünschten Filterstrukturen 71 exakt vorliegen und eine als Prägefläche 70 dienende Werkzeugseite des beispielsweise wieder aus NiCo bestehenden Prägewerkzeugs 69 exakt plan ist.

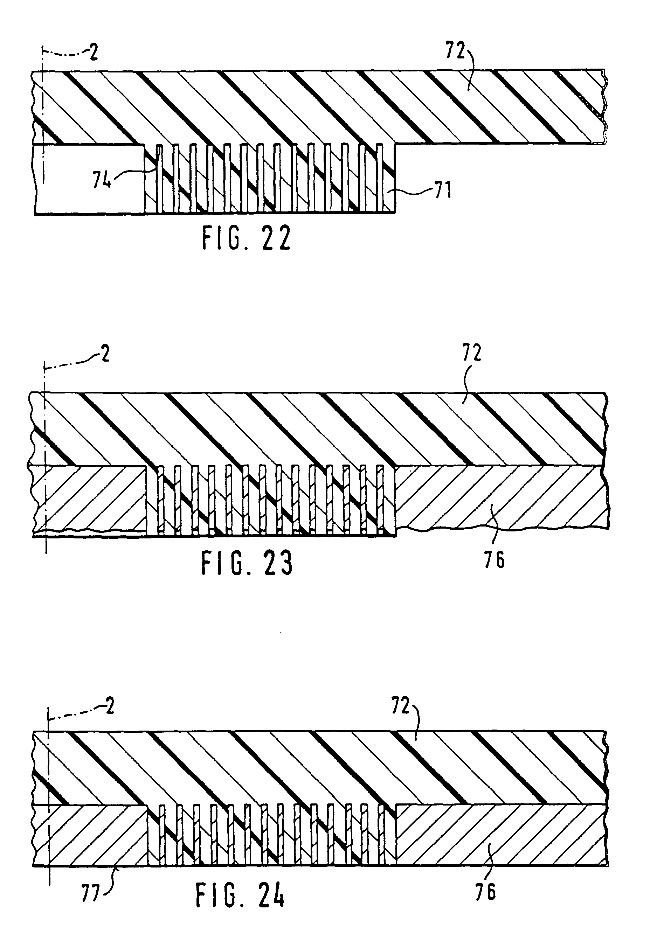

In einem nächsten Verfahrensschritt, der in der Figur 21 dargestellt ist, wird nämlich durch Prägen, konkret durch das Eindrücken des Prägewerkzeugs 69 mit seiner ebenen Prägefläche 70 und der Filterstruktur 71 in die Platte 68 eine Galvanikmaske 72 erzeugt. Das Prägen erfolgt beispielsweise mit einem Druck von 100 bis 300 bar und bei einer Temperatur von 130° C bis 170° C. Damit ist eine ausreichend hohe Plastizität der PMMA-Platte 68 gegeben, um die einzuprägende Struktur des Prägewerkzeugs 69 aufzunehmen. Das Entformen des Prägewerkzeugs 69 wird z. B. bei einer Temperatur von 70° C vorgenommen. Nach dem Prägen der Galvanikmaske 72 liegt also ein Teil vor, so wie es in der Figur 22 dargestellt ist. Um ein Galvanisieren an der Galvanikmaske 72 und ein späteres Ablösen des neu gewachsenen Teils von der Galvanikmaske 72 zu gewährleisten, ist es notwendig, nur Bodenflächen 74 der Filterstruktur 71 der Galvanikmaske 72 zu metallisieren. Diese sogenannte Startmetallisierung erzeugt also eine metallische Leitfläche, die für die Galvanik gebraucht wird. Die Metallisierung kann allerdings nicht durch Sputtern erfolgen, da so die Filterstruktur 71 aufgrund der sich an den Seitenflächen der Filterstruktur 71 anlagernden Metallatome zuwachsen würde.

In einem folgenden Verfahrensschritt wird, wie Figur 23 zeigt, die mit einer Startmetallisierung an den Bodenflächen 74 versehene Galvanikmaske 72 in einem Galvanikbad mit beispielsweise Kupfer, Nickel oder einer Nickellegierung, insbesondere mit NiCo an der Seite der Filterstruktur 71 galvanisiert. Hierbei wird ebenfalls, wie bereits bei der Herstellung des Prägestempels 61 erwähnt, durch (isotropes) Wachstum der galvanischen Schicht an der Galvanikmaske 72 eine später den oberen Abschnitt 44 der Düsenplatte 23 ergebende Schicht 76 erzeugt. Die so erzeugte Schicht 76 weist eine formgetreue Nachbildung der für die Düsenplatte 23 wichtigen Filterstruktur 71 auf. Die Schicht 76 kann nunmehr durch ein nachfolgendes Fräsen oder Schleifen entlang einer Schleiflinie 77 (Figur 24) planarisiert werden, so daß eventuell während des Galvanisierens auftretende Unebenheiten beseitigt werden können. Dieses Planarisieren findet jedoch nur optional statt.

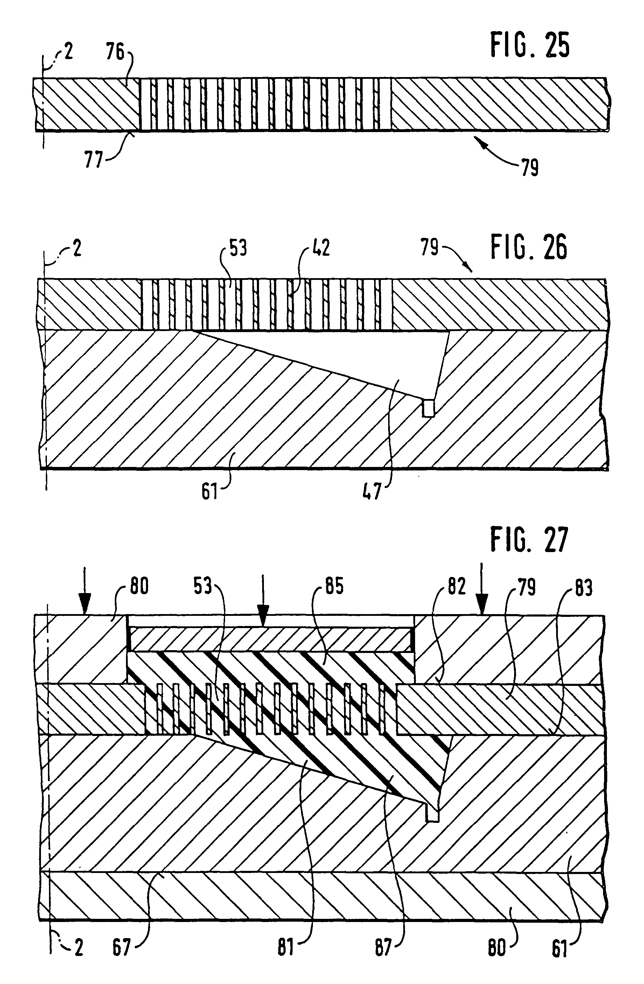

Danach wird die Galvanikmaske 72 aus PMMA als Träger von der Schicht 76 abgelöst, so daß diese als dünne Folie einzeln vorliegt (Figur 25). Dieses Entformen kann, wie bereits erwähnt, durch den Einsatz von Essigsäureethylester zum Ablösen der Galvanikmaske 72 erfolgen oder mittels mechanischer Trennverfahren stattfinden. Nachfolgend wird, wie in Figur 26 gezeigt, das nunmehr als Filterfolie 79 bezeichnete, aber im Grunde genommen die Schicht 76 und später den oberen Abschnitt 44 darstellende Teil justiert auf den nach Figur 18 fertiggestellten Prägestempel 61 aufgesetzt. Dieses Aufsetzen muß so exakt erfolgen, daß der Filter 42 und die Ringkammer 47 bereits ihre gewünschte, genau definierte Lage zueinander einnehmen. Unmittelbar an dieses Aufsetzen schließt sich ein Evakuieren des gebildeten Hohlraums 81 (Figur 27) an. Dieses Befreien des Hohlraums 81 von Luft dient vor allen Dingen dazu, daß beim nachfolgenden Spritzgießen in den Hohlraum 81 aus Ringkammer 47 und Poren 53 keine Luftblasen entstehen.

Das evakuierte Teil aus Filterfolie 79 und Prägestempel 61 liegt dazu bereits in einem Werkzeug 80 vor, das sowohl von der Schleiflinie 67 her als auch von einer der Schleiflinie 77 der Filterfolie 79 gegenüberliegenden Seite 82 her dieses Teil vollständig einspannt. Mit einem Druck von beispielsweise 300 bar werden die Filterfolie 79 und der Prägestempel 61 mit dem Werkzeug 80 so gegeneinander gedrückt, daß gewährleistet ist, daß kein Spritzgießwerkstoff an die Berührungsfläche 83 zwischen Filterfolie 79 und Prägestempel 61 gelangen kann. Das Spritzgießen erfolgt von der Seite der Filterfolie 79 aus. Beispielsweise mit einer Transferpresse als Werkzeug 80 wird in den Hohlraum 81 über die Poren 53, also durch den Filter 42 hindurch, bei 160° C flüssiges PMMA gespritzt. Das Spritzen erfolgt so lange, bis der gesamte Hohlraum 81 vollständig mit PMMA ausgefüllt ist. Außerdem bleibt an der Seite 82 der Filterfolie 79 oberhalb des Filters 42 eine sich durch die Form des Werkzeugs 80 ergebende Anspritzplatte 85 stehen.

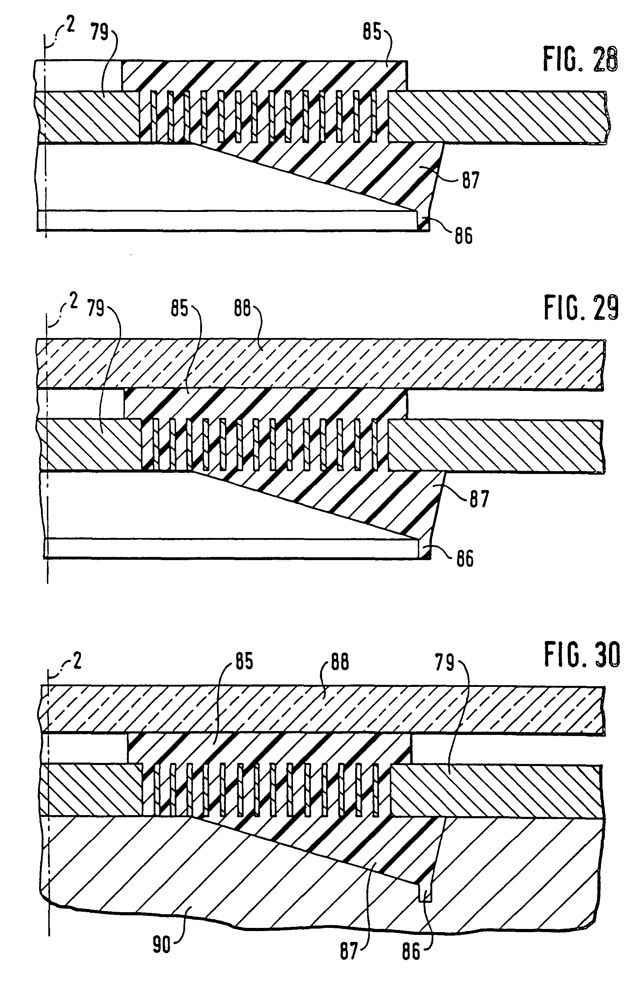

Nach dem Erkalten des PMMA in dem Hohlraum 81 bis z. B. unter 70° C wird zuerst das Werkzeug 80 wieder entfernt. Außerdem kann nun sehr leicht der Prägestempel 61 abgenommen und oftmals wiederverwendet werden. In der Figur 28 ist das verbleibende Teil aus Anspritzplatte 85, Filterfolie 79 mit PMMA-gefüllten Poren 53 sowie einem die Form der Ringkammer 47 und des Ringspaltes 35 aufweisenden Negativteil 87 (einschließlich einer Spritzlippe 86) aus PMMA nach dem Entformen aus dem Werkzeug 80 und dem Prägestempel 61 dargestellt. Die Spritzlippe 86 als Negativ besitzt nun schon eine Weite, die exakt der späteren Ringspaltweite b entspricht, beispielsweise 35 *µ*m oder 50 *µ*m. Die Figur 29 zeigt eine Anordnung, bei der das soeben beschriebene Teil mit seiner Anspritzplatte 85 an einer Trägerplatte 88 befestigt ist. Die Trägerplatte 88 aus beispielsweise Glas oder Metall wird beim späteren Schleifen gebraucht, um eine Handhabung des sehr dünnen Teils überhaupt zu ermöglichen.

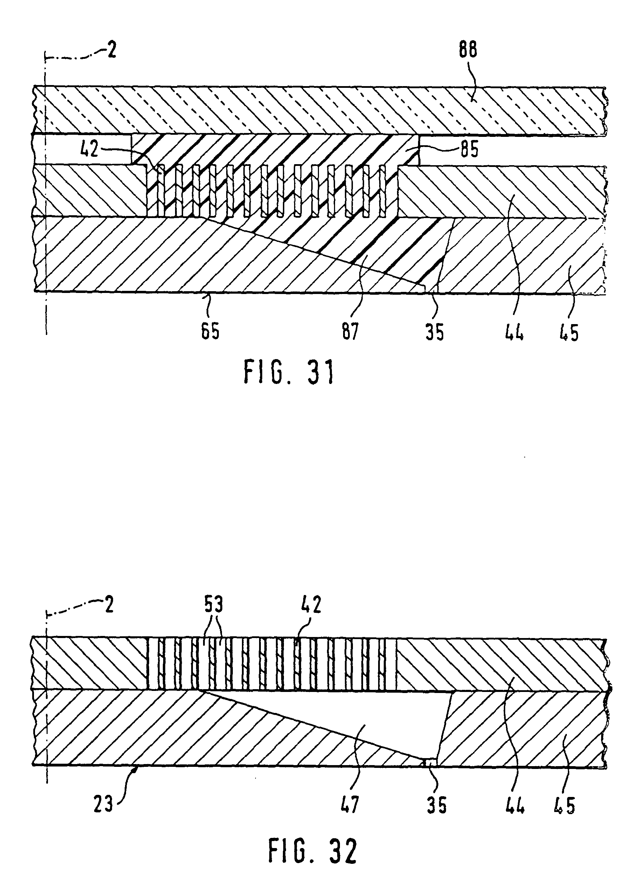

Die Figur 30 zeigt, daß ein nochmaliges Galvanisieren um das Negativteil 87 mit der Spritzlippe 86 erfolgen muß, um nun endgültig den unteren Abschnitt 45 auszuformen. In diesem Verfahrensschritt wird also das Negativteil 87 in einem Galvanikbad mit beispielsweise Kupfer, Nickel oder einer Nickellegierung, insbesondere mit NiCo umhüllt. Durch Wachstum der galvanischen Schicht an der Filterfolie 79 um das Negativteil 87 herum wird nun eine den späteren unteren Abschnitt 45 ergebende Schicht 90 erzeugt, die fest mit der Filterfolie 79 verbunden ist. Dabei weist die Schicht 90 wiederum eine formgetreue Nachbildung des Negativteils 87 aus. Entlang der bereits in der Figur 16 dargestellten Abspritzebene 65 wird die Schicht 90 nachfolgend durch Fräsen oder Schleifen planarisiert. Der obere Abschnitt 44 und der untere Abschnitt 45 liegen nun zum ersten Mal zusammenhängend in Form der gewünschten Düsenplatte 23 vor, wobei auch der Ringspalt 35 durch das Abschleifen erstmals seine vorherbestimmte Ringspalthöhe h aufweist (Figur 31). In einem letzten, in der Figur 32 dargestellten Verfahrensschritt wird das sich im Hohlraum 81 befindliche PMMA herausgelöst sowie die Anspritzplatte 85 abgelöst. Dieser Vorgang erfolgt wiederum beispielsweise mittels Essigsäureethylester. Damit liegt auch automatisch die Trägerplatte 88 getrennt von der Düsenplatte 23 vor, die in dieser Form an einem Einspritzventil, wie es in der Figur 1 teilweise gezeigt ist, montierbar ist.

Durch die beschriebenen Verfahrensschritte ist es möglich, Düsenplatten 23 aus zwei Teilen, nämlich der Filterfolie 79 und der Schicht 90, herzustellen, die die Abschnitte 44 und 45 letztlich darstellen. Durch den konsequenten Einsatz der Abformtechnik wird eine kostengünstige Massenfertigung selbst dann möglich, wenn das Prägewerkzeug 69 durch die hochpräzise und relativ aufwendige LIGA-Technik und der Prägestempel 61 durch Erzeugen der kostenintensiven, mikrostrukturierten Urform 60 hergestellt werden. Mit mikromechanischer Präzision ist nämlich eine Abformung bei Toleranzen von nur ca. 1 *µ*m möglich. Der Prägestempel 61 weist eine solche Qualität auf, daß er bei konstant bleibender Ringspaltweite b mehr als zehntausendmal einsetzbar ist, also eine sehr hohe Reproduzierbarkeit aufweist. Durch die gleichzeitige Herstellung einer Vielzahl von Prägestempeln 61 und der daraus resultierenden gleichzeitigen Abformung einer Vielzahl von Düsenplatten 23 ist das Herstellungsverfahren mit hoher Effektivität durchführbar.

## Patentansprüche

1. Düsenplatte, insbesondere für Einspritzventile, mit einem vollständigen Durchgang für ein Fluid, **dadurch gekennzeichnet, daß** dieser Durchgang von wenigstens einem Filter (42), wenigstens einer Ringkammer (47) und wenigstens einem ununterbrochenen Ringspalt (35) gebildet wird.

2. Düsenplatte nach Anspruch 1, **dadurch gekennzeichnet, daß** sie einen oberen Abschnitt (44) und einen unteren Abschnitt (45) umfaßt, die in Strömungsrichtung des Fluids unmittelbar hintereinander folgen, wobei der obere Abschnitt (44) den wenigstens einen Filter (42) und der untere Abschnitt (45) die wenigstens eine Ringkammer (47) sowie den wenigstens einen Ringspalt (35) beinhaltet.

3. Düsenplatte nach Anspruch 1 oder 2, **dadurch gekennzeichnet, daß** der Filter (42) kreisringförmig ausgebildet ist und außen vollständig in Umfangsrichtung von einem Außenbereich (50) umgeben ist und selbst einen inneren kreisförmigen Innenbereich (51) der Düsenplatte (23) umschließt.

4. Düsenplatte nach Anspruch 1 oder 2, **dadurch gekennzeichnet, daß** der Filter (42) aus mehreren, zusammenhängenden Filterbereichen (42', 42'') gebildet ist, zwischen denen mehrere Innenbereiche (51) der Düsenplatte (23) eingeschlossen sind und der Filter (42) außen vollständig in Umfangsrichtung von einem Außenbereich (50) umgeben ist.

5. Düsenplatte nach Anspruch 3 oder 4, **dadurch gekennzeichnet, daß** der Filter (42) ein Element ist, das eine Vielzahl von Poren (53), die durch dünne Stege jeweils voneinander getrennt sind, aufweist.

6. Düsenplatte nach Anspruch 5, **dadurch gekennzeichnet, daß** die Poren (53) des Filters (42) wabenförmig ausgeführt sind mit dem Querschnitt eines Sechskants.

7. Düsenplatte nach Anspruch 2 und 3, **dadurch gekennzeichnet, daß** die Länge der Poren (53) des Filters (42) der Dicke des oberen Abschnitts (44) der Düsenplatte (23) entspricht.

8. Düsenplatte nach einem der vorhergehenden Ansprüche, **dadurch gekennzeichnet, daß** der Filter (42) eine über seine gesamte radiale Erstreckung aufweisende konstante axiale Dicke besitzt.

9. Düsenplatte nach einem der Ansprüche 1 bis 6, **dadurch gekennzeichnet, daß** der Filter (42) eine veränderliche axiale Dicke über seine radiale Erstreckung aufweist.

10. Düsenplatte nach Anspruch 1 oder 2, **dadurch gekennzeichnet, daß** die wenigstens eine Ringkammer (47) radial von Wandungen (54, 55) begrenzt wird, die unter einem Winkel zur senkrechten, axialen Erstreckung der Düsenplatte (23) verlaufen und somit eine Radialkomponente aufweisen.

11. Düsenplatte nach Anspruch 10, **dadurch gekennzeichnet, daß** die innere, der Mitte der Düsenplatte (23) zugewandte Wandung (54) und die äußere Wandung (55) der Ringkammer (47) mit unterschiedlichen Neigungsrichtungen verlaufen.

12. Düsenplatte nach Anspruch 10, **dadurch gekennzeichnet, daß** die innere, der Mitte der Düsenplatte (23) zugewandte Wandung (54) und die äußere Wandung (55) der Ringkammer (47) mit gleicher Neigungsrichtung, aber unter verschiedenen Winkeln verlaufen.

13. Düsenplatte nach Anspruch 11 oder 12, **dadurch gekennzeichnet, daß** die innere Wandung (54) flacher verläuft und somit eine größere Radialkomponente besitzt als die äußere Wandung (55).

14. Düsenplatte nach Anspruch 2 und 13, **dadurch gekennzeichnet, daß** die flache innere Wandung (54) der Ringkammer (47) zumindest teilweise direkt stromabwärts des Filters (42) angeordnet ist, so daß ein durch den Filter (42) strömendes Fluid auf die innere Wandung (54) trifft und umgelenkt wird.

15. Düsenplatte nach Anspruch 10 oder 14, **dadurch gekennzeichnet, daß** die flache innere Wandung (54) der Ringkammer (47) wenigstens teilweise von einer ebenen, waagerechten Prallfläche (54') gebildet wird.

16. Düsenplatte nach Anspruch 2 und 13, **dadurch gekennzeichnet, daß** die steile äußere Wandung (55) der Ringkammer (47) nicht direkt stromabwärts des Filters (42), sondern mit radialem Versatz angeordnet ist.

17. Düsenplatte nach Anspruch 10, **dadurch gekennzeichnet, daß** die Wandungen (54, 55) der Ringkammer (47) in Strömungsrichtung bis auf das Maß des Ringspaltes (35) divergieren, der den stromabwärtigen Auslaß der Ringkammer (47) darstellt.

18. Düsenplatte nach Anspruch 17, **dadurch gekennzeichnet, daß** die Flanken des Ringspaltes (35) senkrecht verlaufen und aus den Wandungen (54, 55) der Ringkammer (47) hervorgehen.

19. Düsenplatte nach Anspruch 1, **dadurch gekennzeichnet, daß** die Düsenplatte (23) durch den Ringspalt (35) in einen Außenbereich (50) und einen Innenbereich (51) aufgeteilt ist und eine stromabwärtige Begrenzungsfläche (52) des Außenbereichs (50) zumindest im Bereich des Ringspaltes (35) axial versetzt zu einer stromabwärtigen Begrenzungsfläche (52') des Innenbereichs (51) liegt.

20. Düsenplatte nach Anspruch 19, **dadurch gekennzeichnet, daß** der axiale Abstand der beiden Begrenzungsflächen (52, 52') der Höhe (h') einer senkrechten Flanke des Ringspaltes (35) entspricht.

21. Düsenplatte nach Anspruch 19, **dadurch gekennzeichnet, daß** der axiale Abstand der beiden Begrenzungsflächen (52, 52') aufgrund eines zusätzlichen axialen Versatzes (e) größer als die Höhe (h') einer senkrechten Flanke des Ringspaltes (35) ist.

22. Düsenplatte nach Anspruch 4, **dadurch gekennzeichnet, daß** die Düsenplatte (23) zwei voneinander unabhängige Ringspalte (35) aufweist, die jeweils mit mehreren Filterbereichen (42', 42'') des Filters (42) in Verbindung stehen.

23. Düsenplatte nach Anspruch 1, **dadurch gekennzeichnet, daß** der wenigstens eine ununterbrochene Ringspalt (35) kreisförmig ist.

24. Düsenplatte nach Anspruch 1, **dadurch gekennzeichnet, daß** der wenigstens eine ununterbrochene Ringspalt (35) eine von einer Kreisform abweichende Gestalt aufweist.

25. Düsenplatte nach Anspruch 1, **dadurch gekennzeichnet, daß** der wenigstens eine ununterbrochene Ringspalt (35) eine konstante Ringspaltweite (b) hat.

26. Düsenplatte nach Anspruch 1, **dadurch gekennzeichnet, daß** der wenigstens eine ununterbrochene Ringspalt (35) eine axiale Ringspalthöhe (h) hat, die kleiner als die Ringspaltweite (b) ist.

27. Düsenplatte nach einem der Ansprüche 23 bis 26, **dadurch gekennzeichnet, daß** die Ringspaltweite (b) des Ringspaltes (35) 25 *µ*m bis 50 *µ*m beträgt.

28. Verfahren zur Herstellung einer Düsenplatte (23) nach einem der Ansprüche 1 bis 27, **dadurch gekennzeichnet, daß** ein oberer und ein unterer Abschnitt (44, 45) der Düsenplatte (23) durch Kombination von MIGA (Mikrostrukturierung, Galvanoformung, Abformung)-Technik und LIGA (Lithographie, Galvanoformung, Abformung)-Technik hergestellt werden.

29. Verfahren nach Anspruch 28, **dadurch gekennzeichnet, daß** eine Urform (60) zur Herstellung eines Prägestempels (61), der wiederum der oftmaligen Herstellung des unteren Abschnitts (45) dient, mittels Mikrostrukturierung gefertigt wird.

30. Verfahren nach Anspruch 29, **dadurch gekennzeichnet, daß** die Herstellung der Urform (60) mittels Diamantdrehen erfolgt.

31. Verfahren nach Anspruch 29, **dadurch gekennzeichnet, daß** die Herstellung der Urform (60) durch Ablatieren mittels eines Excimerlasers erfolgt.

32. Verfahren nach Anspruch 28, **dadurch gekennzeichnet, daß** ein Prägewerkzeug (69) mittels LIGA-Technik ausgeformt wird, das zur Herstellung des oberen Abschnitts (44) der Düsenplatte (23) einschließlich dem Filter (42) dient, dann das Prägewerkzeug (69) in eine dünne Platte (68) eingeprägt wird, wodurch die Struktur des Prägewerkzeugs (69) als Negativ in der Platte (68) vorliegt, danach das Prägewerkzeug (69) entformt wird, so daß aus der Platte (68) eine neu geformte Galvanikmaske (72) gebildet ist, nachfolgend die Galvanikmaske (72) mit einer zumindest teilweisen Startmetallisierung versehen wird, dann die zumindest teilweise metallisierte Galvanikmaske (72) galvanisiert wird, wobei eine Schicht (76) aufwächst, danach die Galvanikmaske (72) von der neu gebildeten Schicht (76) abgelöst wird, wodurch die Schicht (76) als eine Filterfolie (79) vorliegt.

33. Verfahren nach Anspruch 29 und 32, **dadurch gekennzeichnet, daß** die Filterfolie (79) justiert wird und auf den Prägestempel (61) aufgesetzt wird, wobei ein Hohlraum (81) im Inneren des Prägestempels (61) und der Filterfolie (79) gebildet wird, dann die Filterfolie (79) und der Prägestempel (61) in einem Werkzeug (80) angeordnet werden, nachfolgend der Hohlraum (81) in Filterfolie (79) und Prägestempel (61) evakuiert wird, anschließend der Hohlraum (81) mittels Spritzgießen gefüllt wird, dann das Werkzeug (80) entfernt wird, danach der Prägestempel (61) von der Filterfolie (79) und einem durch das Spritzgießen entstandenen Negativteil (87) abgenommen wird, wobei das im Hohlraum (81) gebildete Negativteil (87) die Kontur einer Ringkammer (47) und eines Ringspaltes (35) der Düsenplatte (23) vorgibt, dann um das Negativteil (87) eine Schicht (90) mittels Galvanisieren aufgebracht wird, diese den unteren Abschnitt (45) der Düsenplatte (23) darstellende Schicht (90) geschliffen wird und abschließend das Negativteil (87) aus der Düsenplatte (23) entfernt wird.

34. Verfahren nach Anspruch 29, 32 oder 33, **dadurch gekennzeichnet, daß** das Galvanisieren mit NiCo erfolgt.

35. Verfahren nach Anspruch 29, 32 oder 33, **dadurch gekennzeichnet, daß** als Material für die Urform (60), für die Platte (68) und damit für die Galvanikmaske (72) sowie für das Negativteil (87) Polymethylmethacrylat (Abk. PMMA) verwendet wird.

36. Verfahren nach Anspruch 35, **dadurch gekennzeichnet, daß** zum Auflösen des PMMA Essigsäureethylester eingesetzt wird.

## Claims

1. Nozzle plate, in particular for injection valves, with a complete passage for a fluid, **characterized in that** this passage is formed by at least one filter (42), at least one annular chamber (47) and at least one uninterrupted annular gap (35).

2. Nozzle plate according to Claim 1, **characterized in that** it comprises an upper portion (44) and a lower portion (45), which follow directly one after the other in the direction of flow of the fluid, the upper portion (44) containing the at least one filter (42) and the lower portion (45) containing the at least one annular chamber (47) and the at least one annular gap (35).

3. Nozzle plate according to Claim 1 or 2, **characterized in that** the filter (42) is formed in the shape of a circular ring and is completely surrounded on the outside in the circumferential direction by an outer region (50) and itself encloses an inner circular inner region (51) of the nozzle plate (23).

4. Nozzle plate according to Claim 1 or 2, **characterized in that** the filter (42) is formed by a plurality of contiguous filter regions (42', 42''), between which a plurality of inner regions (51) of the nozzle plate (23) are enclosed, and the filter (42) is completely surrounded on the outside in the circumferential direction by an outer region (50).

5. Nozzle plate according to Claim 3 or 4, **characterized in that** the filter (42) is an element which has a multiplicity of pores (53), which are respectively separated from one another by thin interconnecting pieces.

6. Nozzle plate according to Claim 5, **characterized in that** the pores (53) of the filter (42) are configured in a honeycomb form, with the cross section of a hexagon.

7. Nozzle plate according to Claims 2 and 3, **characterized in that** the length of the pores (53) of the filter (42) corresponds to the thickness of the upper portion (44) of the nozzle plate (23).

8. Nozzle plate according to one of the preceding claims, **characterized in that** the filter (42) has a constant axial thickness over its entire radial extent.

9. Nozzle plate according to one of Claims 1 to 6, **characterized in that** the filter (42) has a variable axial thickness over its radial extent.

10. Nozzle plate according to Claim 1 or 2, **characterized in that** the at least one annular chamber (47) is radially bounded by walls (54, 55) which run at an angle in relation to the perpendicular, axial extent of the nozzle plate (23) and consequently have a radial component.

11. Nozzle plate according to Claim 10, **characterized in that** the inner wall (54), facing the centre of the nozzle plate (23), and the outer wall (55) of the annular chamber (47) run with different directions of inclination.

12. Nozzle plate according to Claim 10, **characterized in that** the inner wall (54), facing the centre of the nozzle plate (23), and the outer wall (55) of the annular chamber (47) run with the same direction of inclination, but at different angles.

13. Nozzle plate according to Claim 11 or 12, **characterized in that** the inner wall (54) runs flatter and consequently has a greater radial component than the outer wall (55).

14. Nozzle plate according to Claims 2 and 13, **characterized in that** the flat inner wall (54) of the annular chamber (47) is arranged at least partially directly downstream of the filter (42), so that a fluid flowing through the filter (42) meets the inner wall (54) and is deflected.

15. Nozzle plate according to Claim 10 or 14, **characterized in that** the flat inner wall (54) of the annular chamber (47) is formed at least partially by a planar, horizontal baffle surface (54').

16. Nozzle plate according to Claims 2 and 13, **characterized in that** the steep outer wall (55) of the annular chamber (47) is not arranged directly downstream of the filter (42) but with a radial offset.

17. Nozzle plate according to Claim 10, **characterized in that** the walls (54, 55) of the annular chamber (47) diverge in the direction of flow, while leaving the size of the annular gap (35), which represents the downstream outlet of the annular chamber (47) .

18. Nozzle plate according to Claim 17, **characterized in that** the flanks of the annular gap (35) run perpendicularly and start from the walls (54, 55) of the annular chamber (47).

19. Nozzle plate according to Claim 1, **characterized in that** the nozzle plate (23) is divided by the annular gap (35) into an outer region (50) and an inner region (51), and a downstream bounding surface (52) of the outer region (50) lies axially offset in relation to a downstream bounding surface (52') of the inner region (51), at least in the region of the annular gap (35).

20. Nozzle plate according to Claim 19, **characterized in that** the axial distance between the two bounding surfaces (52, 52') corresponds to the height (h') of a perpendicular flank of the annular gap (35) .

21. Nozzle plate according to Claim 19, **characterized in that** the axial distance between the two bounding surfaces (52, 52') is greater than the height (h') of a perpendicular flank of the annular gap (35) on account of an additional axial offset (e).

22. Nozzle plate according to Claim 4, **characterized in that** the nozzle plate (23) has two mutually independent annular gaps (35), which are respectively in connection with a plurality of filter regions (42', 42'') of the filter (42).

23. Nozzle plate according to Claim 1, **characterized in that** the at least one uninterrupted annular gap (35) is circular.

24. Nozzle plate according to Claim 1, **characterized in that** the at least one uninterrupted annular gap (35) has a shape deviating from the form of a circle.

25. Nozzle plate according to Claim 1, **characterized in that** the at least one uninterrupted annular gap (35) has a constant annular gap width (b).

26. Nozzle plate according to Claim 1, **characterized in that** the at least one uninterrupted annular gap (35) has an axial annular gap height (h) which is less than the annular gap width (b).

27. Nozzle plate according to one of Claims 23 to 26, **characterized in that** the annular gap width (b) of the annular gap (35) is 25 µm to 50 µm.

28. Method of manufacturing a nozzle plate (23) according to one of Claims 1 to 27, **characterized in that** an upper portion (44) and a lower portion (45) of the nozzle plate (23) are produced by a combination of the MIGA (Mikrostrukturierung, Galvanoformung, Abformung] [microstructuring, electroforming, moulding) technique and the LIGA (Lithographie, Galvanoformung, Abformung] [lithography, electroforming, moulding) technique.

29. Method according to Claim 28, **characterized in that** a master pattern (60) for producing a stamping die (61), which in turn serves for the frequent production of the lower portion (45), is fabricated by means of microstructuring.

30. Method according to Claim 29, **characterized in that** the production of the master pattern (60) is performed by means of diamond turning.

31. Method according to Claim 29, **characterized in that** the production of the master pattern (60) is performed by ablation by means of an excimer laser.

32. Method according to Claim 28, **characterized in that** a stamping tool (69) which serves for producing the upper portion (44) of the nozzle plate (23) including the filter (42) is formed by means of the LIGA technique, then the stamping tool (69) is stamped into a thin plate (68), whereby the structure of the stamping tool (69) is obtained as a negative in the plate (68), then the stamping tool (69) is removed, so that a newly formed galvanic mask (72) is formed from the plate (68), after which the galvanic mask (32) is provided with at least partial starting metallization, then the at least partially metallized galvanic mask (72) is electrocoated, involving the growing of a layer (76), after which the galvanic mask (32) is detached from the newly formed layer (76), whereby the layer (76) is obtained in the form of a filter film (79).

33. Method according to Claims 29 and 32, **characterized in that** the filter film (79) is adjusted and placed onto the stamping die (61), forming a cavity (81) inside the stamping die (61) and the filter film (79), then the filter film (79) and the stamping die (61) are arranged in a mould (80), after which the cavity (81) in the filter film (79) and stamping die (61) is evacuated, the cavity (81) is subsequently filled by means of injection moulding, then the mould (80) is removed, after which the stamping die (61) is taken off the filter film (29) and a negative part (87) produced by the injection moulding, with the negative part (87) that is formed in the cavity (81) determining the contour of an annular chamber (47) and an annular gap (35) of the nozzle plate (23), then a layer (90) is applied around the negative part (87) by means of electrocoating, this layer (90), representing the lower portion (45) of the nozzle plate (23), is polished and, finally, the negative part (87) is removed from the nozzle plate (23).

34. Method according to Claim 29, 32 or 33, **characterized in that** the electrocoating is carried out with NiCo.

35. Method according to Claim 29, 32 or 33, **characterized in that** polymethylmethacrylate (abbreviation PMMA) is used as the material for the master pattern (60), for the plate (68) and consequently for the galvanic mask (72) and also for the negative part (87).

36. Method according to Claim 35, **characterized in that** ethyl acetate is used for dissolving the PMMA.

## Revendications

1. Plaque de buse notamment pour injecteur à passage total pour un fluide,
**caractérisée en ce qu'**
elle est formée par au moins un filtre (42), au moins une chambre annulaire (47) et au moins un intervalle annulaire (35) non interrompu.

2. Plaque de buse selon la revendication 1,
**caractérisée en ce qu'**
elle comporte un segment supérieur (44) et un segment inférieur (45) qui se suivent directement dans le sens de passage du fluide,
le segment supérieur (44) comportant au moins un filtre (42), et le segment inférieur (45) comprenant la chambre annulaire (47) au moins unique et l'intervalle annulaire (35) au moins unique.

3. Plaque de buse selon l'une quelconque des revendications 1 ou 2,
**caractérisée en ce que**
le filtre (42) a une forme d'anneau de cercle et est entouré extérieurement complètement par une zone extérieure (50) dans la direction périphérique, et lui-même entoure une zone intérieure circulaire (51) de la plaque de buse (23).

4. Plaque de buse selon l'une quelconque des revendications 1 ou 2,
**caractérisée en ce que**
le filtre (42) est formé par plusieurs zones de filtres (42', 42") reliées les unes aux autres et entre lesquelles se trouvent plusieurs zones intérieures (51) de la plaque de buse (23), et le filtre (42) est entouré extérieurement, de manière complète, dans la zone périphérique, par une zone extérieure (50).

5. Plaque de buse selon l'une quelconque des revendications 3 ou 4,
**caractérisée en ce que**
le filtre (42) est un élément ayant un grand nombre de pores (53) séparés les uns des autres chaque fois par une mince entretoise.

6. Plaque de buse selon la revendication 5,
**caractérisée en ce que**
les pores (53) du filtre (42) sont en forme de nids d'abeilles à section hexagonale.

7. Plaque de buse selon l'une quelconque des revendications 2 et 3,
**caractérisée en ce que**
la longueur des pores (53) du filtre (42) correspond à l'épaisseur du segment supérieur (44) de la plaque de buse (23).

8. Plaque de buse selon l'une quelconque des revendications précédentes,
**caractérisée en ce que**
le filtre (42) a une épaisseur axiale constante sur toute son extension radiale.

9. Plaque de buse selon l'une quelconque des revendications 1 à 6,
**caractérisée en ce que**
le filtre (42) a une épaisseur axiale variable suivant son extension radiale.

10. Plaque de buse selon l'une quelconque des revendications 1 ou 2,
**caractérisée en ce qu'**
au moins une chambre annulaire (47) est délimitée radialement par des parois (54, 55) qui font un angle par rapport à l'extension axiale verticale de la plaque de buse (23) et présentent ainsi une composante radiale.

11. Plaque de buse selon la revendication 10,
**caractérisée en ce que**
la paroi intérieure (54) tournée vers le milieu de la plaque de buse (23) et la paroi extérieure (55) de la chambre annulaire (47) ont des directions d'inclinaison différentes.

12. Plaque de buse selon la revendication 10,
**caractérisée en ce que**
la paroi intérieure (54) tournée vers le milieu de la plaque de buse (23) et la paroi extérieure (55) de la chambre annulaire (47) ont la même direction d'inclinaison mais des angles différents.

13. Plaque de buse selon l'une quelconque des revendications 11 ou 12,
**caractérisée en ce que**
la paroi intérieure (54) est plus plate et possède ainsi une composante radiale plus grande que la paroi extérieure (55).

14. Plaque de buse selon l'une quelconque des revendications 2 et 13,
**caractérisée en ce que**
la paroi intérieure plate (54) de la chambre annulaire (47) est située au moins en partie directement en aval du filtre (42) pour qu'un fluide qui traverse le filtre (42) arrive sur la paroi intérieure (54) et est ainsi dévié.

15. Plaque de buse selon l'une quelconque des revendications 10 ou 14,
**caractérisée en ce que**
la paroi intérieure plate (54) de la chambre annulaire (47) est formée au moins en partie par une surface brise-jet (54'), plane, horizontale.

16. Plaque de buse selon l'une quelconque des revendications 2 et 13,
**caractérisée en ce que**
la paroi extérieure (55) de forte pente de la chambre annulaire (47) n'est pas directement en aval du filtre (42) mais avec un décalage radial.

17. Plaque de buse selon la revendication 10,
**caractérisée en ce que**
les parois (54, 55) de la chambre annulaire (47) divergent dans la direction de l'écoulement jusqu'à la mesure de l'intervalle annulaire (35) qui représente la sortie en aval de la chambre annulaire (47).

18. Plaque de buse selon la revendication 17,
**caractérisée en ce que**
les flans de l'intervalle annulaire (35) sont perpendiculaire et sortent des parois (54, 55) de la chambre annulaire (47).

19. Plaque de buse selon la revendication 1,
**caractérisée en ce que**
la plaque de buse (23) est subdivisée par l'intervalle annulaire (35) en une zone extérieure (50) et une zone intérieure (51) et une surface limite (52), en aval de la zone extérieure (50), est décalée axialement au moins dans la zone de l'intervalle annulaire (35) vers une surface limite (52') en aval de la zone intérieure (51).

20. Plaque de buse selon la revendication 19,
**caractérisée en ce que**
la distance axiale des deux surfaces limites (52, 52') correspond à la hauteur (h') du flan vertical de l'intervalle annulaire (35).

21. Plaque de buse selon la revendication 19,
**caractérisée en ce que**
la distance axiale des deux surfaces limites (52, 52') est supérieure à la hauteur (h') du flan vertical de l'intervalle annulaire (35) du fait d'un décalage axial supplémentaire (e).

22. Plaque de buse selon la revendication 4,
**caractérisée en ce que**
la plaque de buse (23) comporte deux intervalles annulaires (35) indépendants l'un de l'autre, reliés chaque fois à plusieurs zones de filtres (42', 42") du filtre (42).

23. Plaque de buse selon la revendication 1,
**caractérisée en ce qu'**
au moins un intervalle annulaire (35), ininterrompu, est de forme circulaire.

24. Plaque de buse selon la revendication 1,
**caractérisée en ce qu'**
au moins un intervalle annulaire (35), ininterrompu, a une forme différente d'une forme circulaire.

25. Plaque de buse selon la revendication 1,
**caractérisée en ce qu'**
au moins un intervalle annulaire (35), ininterrompu, a une largeur d'intervalle (b) constante.

26. Plaque de buse selon la revendication 1,
**caractérisée en ce qu'**
au moins un intervalle annulaire ininterrompu (35) a une hauteur axiale (h) inférieure à la largeur (b) de l'intervalle.

27. Plaque de buse selon l'une quelconque des revendications 23 à 26,
**caractérisée en ce que**
la largeur (b) de l'intervalle annulaire (35) est de 25 µm jusqu'à 50 µm.

28. Procédé de réalisation d'une plaque de buse (23) selon l'une quelconque des revendications 1 à 27,
**caractérisé en ce qu'**
on réalise un segment supérieur et un segment inférieur (44, 45) de la plaque de buse (23) par une combinaison des techniques MIGA (microstructuration, galvanoplastie, moulage) et LIGA (lithographie, galvanoplastie, moulage).

29. Procédé selon la revendication 28,
**caractérisé en ce qu'**
on fabrique par microstructuration une forme de base (60) servant à la réalisation d'un poinçon de base (61) servant lui-même à la fabrication répétée du segment inférieur (45).

30. Procédé selon la revendication 29,
**caractérisé en ce qu'**
on réalise la forme de base (60) par un travail au tour avec un diamant.

31. Procédé selon la revendication 29,
**caractérisé en ce qu'**
on réalise la forme de base (60) par ablation à l'aide d'un laser Excimer.

32. Procédé selon la revendication 28,
**caractérisé en ce qu'**
on réalise un outil de matriçage (69) en technique LIGA qui sert à fabriquer le segment supérieur (44) de la plaque de buse (23) y compris le filtre (42) puis on imprime l'outil de matriçage (69) dans une plaque mince (68), si bien que la structure de l'outil de matriçage (69) se trouve comme négatif dans la plaque (68), puis on déforme l'outil de matriçage (69) pour réaliser un nouveau masque de galvanoplastie (72) à partir de la plaque (68), et ensuite on munit le masque de galvanoplastie (72) d'une métallisation initiale au moins partielle puis on galvanise au moins partiellement le masque de galvanoplastie métallisé (72) pour développer une couche (76), puis on détache le masque de galvanoplastie (72) de la couche (76) nouvellement formée pour disposer ainsi de la couche (76) comme d'une feuille de filtre (79).

33. Procédé selon l'une quelconque des revendications 29 et 32,
**caractérisé en ce qu'**
on ajuste la feuille de filtre (79) et on l'applique sur le poinçon de matriçage (61), en formant une cavité (81) à l'intérieur du poinçon de matriçage (61) et de la feuille de filtre (79),
puis on installe la feuille de filtre (79) et le poinçon de matriçage (61) dans un outil (80),
ensuite on fait le vide de la cavité (81) de la feuille de filtre (79) et du poinçon de matriçage (61), puis on remplit la cavité (81) par coulée par injection, puis on enlève l'outil (80) et on enlève le poinçon de matriçage (61) de la feuille de filtre (79) et de la partie négative (81) formée par injection,
la partie négative (87) formée dans la cavité (81) définissant le contour d'une chambre annulaire (47) et d'un intervalle annulaire (35) de la plaque de buse (23), puis on applique autour de la partie négative (87) une couche (90) par galvanisation, on meule la couche (90) qui constitue le segment inférieur (45) de la plaque de buse (23) et ensuite on enlève la partie négative (87) de la plaque de buse (23).

34. Procédé selon l'une quelconque des revendications 29, 32, 33,
**caractérisé en ce que**
la galvanisation se fait avec NiCo.

35. Procédé selon l'une quelconque des revendications 29, 32, 33,
**caractérisé en ce que**
comme matière pour la forme de base (60), pour la plaque (68) et ainsi pour le masque de galvanoplastie (72) et pour la partie négative (87) on utilise du polyméthylméthacrylate (PMMA).

36. Procédé selon la revendication 35,
**caractérisé en ce qu'**
on utilise de l'ester éthylique d'acide acétique pour dissoudre le polyméthylméthacrylate (PMMA).
